# EUROPEAN PATENT APPLICATION

(11) **EP 4 583 063 A1**
(43) Date of publication of application: **09.07.2025**
(21) Application number: 24204840.3
(22) Date of filing: 04.10.2024
(51) Int. Cl.: G06V 10/764, G06V 10/82, G06V 20/40, G06V 20/70, G06N 3/044, G06N 3/045, G06N 3/0464, G06N 3/08, G06N 3/09, G06N 20/20

(54) **SYSTEM AND METHOD FOR ACTIVELY TRIAGING DATA IN A COMPUTATIONAL STORAGE SYSTEM DEPLOYED IN AN EDGE ENVIRONMENT**

(30) Priority: 04.10.2023 US 202363542341 P
(71) Applicant: Ubotica Technologies Limited, Dublin D11 KXN4 (IE)
(72) Inventor: Moloney, David, Glasnevin, D11 KXN4 (IE); GUESMI, Besma, Glasnevin, D11 KXN4 (IE); ESPINOSA ARANDA, José Luis, Glasnevin, D11 KXN4 (IE); HERVÁS MARTÍN, Elena, Glasnevin, D11 KXN4 (IE); DENIZ SUÁREZ, Oscar, Glasnevin, D11 KXN4 (IE)
(74) Representative: FRKelly

(57) **Abstract**

Methods and systems for actively triaging data in a computational storage system deployed in an edge environment include receiving an ensemble of signals aggregated from multiple sensors and processing the signals to generate pre-processed data. The pre-processed data may be applied to one or more neural networks to identify events of interest and generate corresponding labels. Outputs from the neural networks may be combined into a unified detection result that may be used to predict future events. A priority classification may be determined for the detection result or predicted event. High-priority events may trigger low-latency alerts, while non-high-priority data and predicted events may be stored with associated labels in onboard non-volatile storage.

## Description

### RELATED APPLICATIONS

This application claims the benefit of priority to U.S. Provisional Patent Application No. 63/542,341 entitled "System and Method for Actively Triaging Data in a Computational Storage System Deployed in an Edge Environment" filed on October 4, 2023 the entire contents of which are hereby incorporated by reference for all purposes.

### BACKGROUND

Edge computing is an area of computing (within the broader field of distributed computing) that has experienced significant growth recently. It shifts data processing closer to where data is generated, as opposed to relying exclusively on centralized data centres. It is becoming increasingly widespread due to the increased amount of data that is generated at edge locations (e.g., due to the growth in connected CCTV video cameras, smart homes, connected cars, and industrial applications).

The benefits of performing the processing closer to the source of the data may include reduced power consumption, reduced power dissipation, reduced bandwidth requirements, reduced latency, improved data privacy, and enhanced resilience in environments with intermittent connectivity. These advantages make edge computing particularly well-suited for applications in which real-time processing and decision-making are important.

In parallel, the development of computational storage systems has introduced new opportunities to further enhance the efficiency of edge computing environments. By embedding processing capabilities directly within storage devices, computational storage systems reduce the need to transfer large amounts of data between storage and processors, which may result in significant reductions in latency and resource usage. This combination of storage and processing functionality may be especially useful in edge environments in which devices often have limited processing power, bandwidth, and energy resources.

Artificial intelligence (AI), machine learning (ML), and related technologies have also seen significant advancements in recent years. In particular, neural networks have transitioned from being specialist academic projects to being used in mainstream commercial and consumer-facing applications. Machine Learning Operations (MLOps) relates to the efficient and consistent deployment and maintenance of machine learning models in production environments. Machine learning and MLOps have the potential to solve a variety of long-standing technical challenges. The potential integration of these new and emerging AI/ML technologies into edge devices will accelerate the need for more advanced data-handling capabilities. In addition, AI/ ML algorithms (especially those relying on neural networks) demand substantial computational power and data management, which may present challenges in resource-constrained environments such as edge devices.

The intersection of edge computing, computational storage, and AI-driven technologies highlights the growing importance of efficient data management and processing at the edge.

### SUMMARY

Various aspects include methods performed by at least one processor in a processing system in an edge device for managing the flow of data and events, including receiving an ensemble of signals that represents aggregated sensor signals from a plurality of input sensors, processing the ensemble of signals to generate pre-processed data, applying the pre-processed data to one or more neural networks to generate output data identifying one or more events of interest, generating one or more labels corresponding to the identified events of interest, combining outputs from one or more neural networks to generate a unified detection result, predicting a future event based on the unified detection result and historical data, determining a priority classification of the unified detection result or predicted future event, determining whether the priority classification exceeds a high-priority event threshold, triggering a low-latency alert in response to determining that the priority classification exceeds the high-priority event threshold, and storing non-high-priority data and predicted events in association with the generated labels in an onboard non-volatile storage of the edge device in response to determining that the priority classification does not exceed the high-priority event threshold.

In some aspects, receiving the ensemble of signals that represents aggregated sensor signals from the plurality of input sensors may include receiving a signal that represents aggregated sensor signals from at least one or more of a camera, an infrared sensor, a pressure sensor, a temperature sensor, a microphone, or a sensor configured to detect ultraviolet or infrared light. In some aspects, receiving the ensemble of signals that represents aggregated sensor signals from the plurality of input sensors may include receiving a signal that synchronizes data collection from the plurality of input sensors and aligns temporal and spatial characteristics of the sensor signals.

In some aspects, the methods may further include processing the ensemble of signals in real-time to handle high-throughput data streams from the plurality of input sensors. In some aspects, applying the pre-processed data to one or more neural networks to generate output data identifying one or more events of interest may include applying the pre-processed data to two or more of a convolutional neural network (CNN), a recurrent neural network (RNN), and a deep neural network (DNN). In some aspects, generating one or more labels corresponding to the identified events of interest may include generating one or more labels based on inference results produced by one or more neural networks.

In some aspects, combining outputs from one or more neural networks to generate the unified detection result may include combining outputs from one or more neural networks using weighted voting or averaging techniques. In some aspects, predicting the future event based on the unified detection result and the historical data may include generating a prediction based on detected patterns, trends in historical data, and the unified detection result. In some aspects, determining the priority classification of the unified detection result or the predicted future event may include determining the priority classification of the unified detection result or the predicted future event based on inputs from one or more of an onboard timer, an onboard computer, or an onboard fault detector.

In some aspects, the method may further include applying machine learning operations (MLOps) to update one or more neural networks. In some aspects, the low-latency alert may include at least one or more of event type information, timestamp information, geographic information, or event summary information. In some aspects, the method may further include storing, in the onboard non-volatile storage, event statistics that include an alert generation frequency or generated alert type information. In some aspects, determining the priority classification of the unified detection result or the predicted future event may include dynamically determining the priority classification based on available bandwidth and storage capacity.

Further aspects may include a computing system (e.g., edge device such as a satellite, etc.) having at least one processor or processing system configured with processor-executable instructions to perform various operations corresponding to the methods discussed above. Further aspects may include a computing device having various means for performing functions corresponding to the method operations discussed above. Further aspects may include a non-transitory processor-readable storage medium having stored thereon processor-executable instructions configured to cause at least one processor or processing system to perform various operations corresponding to the method operations discussed above.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIG. 1 is component block diagram illustrating a system, which includes edge devices in the form of satellites and a centralized site connected to a transmission site, that is suitable for implementing various embodiments.
FIG. 2 is a process flow diagram illustrating a method of performing MLOps.
FIG. 3A is a component diagram of an edge device that is suitable for use with the various embodiments.
FIG. 3B is a process flow diagram illustrating a method of managing the flow of data and events in accordance with some embodiments.
FIG. 4 is a component diagram of a NNS training a single network that is suitable for use with the various embodiments.
FIG. 5 is a component diagram of a NNS training of multiple ensemble networks (i.e., multistage NNS) that is suitable for use with the various embodiments.
FIG. 6 is a component diagram illustrating how the NNS monitoring may be implemented based on comparisons of the pre-computed NNS database with live inference results of a NNS training a single network that is suitable for use with the various embodiments.
FIG. 7 is an activity diagram illustrating a method of applying the LILLIAN labeling method in accordance with various embodiments.
FIG. 8 is a process flow diagram illustrating a method of performing the LILLIAN voting system in order to evaluate the results of LILLIAN auto-labeling and to limit the false positive detections.
FIG. 9 is a process flow diagram illustrating a method of image processing performed by the multistage LILLIAN module, where the input data is captured from different imaging sensors.
FIG. 10 is a process flow diagram illustrating a method of training and/or testing the prediction network.
FIG. 11 is a process flow diagram illustrating a method of using an ensemble of prediction networks.
FIG. 12 is a component diagram of the triage/predictor subsystem that is suitable for use with the various embodiments.
FIG. 13 is a component diagram of the processing hardware that is suitable for use with the various embodiments.
FIG. 14 is a process flow diagram illustrating a method of storing events to non-volatile storage.
FIG. 15 is a component diagram of a computing system suitable for implementing the various embodiments.
FIGs. 16 and 17 are component diagrams of an edge device in the form of a satellite that is suitable for implementing some embodiments.
FIG. 18 is a component diagram of a server that is suitable for implementing some embodiments.

### DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

The terms "uplinking" and "uploading" may be used interchangeably herein to refer the transmission of data, commands, or other information from a local or ground-based device to a remote or terrestrial system, such as a satellite. Uplinking typically occurs in satellite communications, where data is transmitted from Earth to a satellite.

The terms "downlinking" and "downloading" may be used interchangeably herein to refer to the transmission of data, commands, or other information from a remote or terrestrial system, such as a satellite, to a local or ground-based device. Downlinking typically occurs in satellite communications, where data is transmitted from a satellite to Earth.

The term "computing device" may be used herein to refer to any of a wide variety of electronic devices capable of executing programmed instructions. These devices include, but are not limited to, server computing devices, personal computers, laptop computers, tablet computers, edge devices, user equipment (UE), multimedia Internet-enabled cellular telephones, smartphones, smart wearable devices (e.g., smartwatches, smart glasses, fitness trackers, smart clothing, jewelry, shoes, etc.), Internet-of-Things (IoT) devices (e.g., smart televisions, smart speakers, smart locks, lighting systems, smart switches, smart doorbell cameras, security systems, smart thermostats, connected appliances, etc.), connected vehicles (e.g., autonomous vehicles, electric vehicles), satellites (e.g., CubeSats, small satellites, etc.), drones, high-altitude platform stations (HAPS), augmented reality (AR) and virtual reality (VR) devices, AI-enabled edge devices, and other similar devices that include memory and a programmable processor to provide the functionality described herein.

The term "processing system" may be used herein to refer to one or more processors, including multi-core processors, that are organized and configured to perform various computing functions. Various embodiment methods may be implemented in one or more of multiple processors within a processing system as described herein.

The terms "edge device" and "edge computing device" may be used interchangeably herein to refer to any computing device, satellite (e.g., CubeSats, small satellites, orbiting systems, space-based platforms, etc.), connected vehicle (e.g., trucks, cars, etc.), electric scooter, train, tram, metro (which may have connectivity for brief periods while in stations), aircraft, drone (land-based, sea-based, or airborne), high-altitude balloon, high-altitude platform station (HAPS), smartphone, smart wearable device, Internet of Things (IoT) device, eMobility device (e.g., electric scooters, electric bikes), robot, nanobot, or similar computing system, device, or object that includes memory, sensors, processors, and communication circuits for communicating with computing devices at one or more centralized sites. The processor within an edge device may be a programmable processor or a fixed programmed processor (e.g., a pre-programmed FPGA or ASIC) with associated reconfigurable parameters stored in memory. Edge devices are often resource-constrained, with limited processing power, memory capacity, battery life, and/or bandwidth resources.

The term "network edge" may be used herein to refer to the point at which data may be processed or analyzed as close as possible to its source or destination, particularly in scenarios in which reducing latency, conserving bandwidth, and enhancing real-time decision-making are particularly important. Processing data at the network edge may reduce the need for extensive data transmission to centralized servers or cloud infrastructure. The specific location of the network edge may vary based on the application, such as being on the device itself in satellite and IoT networks or at the boundary of a local network interfacing with broader networks like the Internet.

The term "extreme network edge" may be used herein to refer to the most remote and resource-constrained points in a network in which data processing and analysis take place, often far removed (physically, logically, and/or in terms of connectivity) from the centralized site/device or centralized computing resources. Examples include but are not limited to environments such as low Earth orbit, geosynchronous orbit, deep space, underwater regions, and isolated terrestrial areas such as deserts or polar regions. Devices operating at the extreme network edge (e.g., satellites, autonomous vehicles, drones, sensor networks, etc.) often face unique and significant challenges due to constraints on processing power, memory, and bandwidth. As a result, devices deployed at the extreme network edge are often highly specialized and configured to perform specific tasks (e.g., data collection and communication, etc.) with limited local resources (e.g., bandwidth, processing, storage, power, etc.) and/or with little or no reliance on, or reliable access to, external infrastructure.

The term "AI edge device" may be used herein to refer to an edge device that is configured to perform AI operations locally on the device and/or to work in conjunction with other devices (e.g., another edge device, centralized site/device, etc.) that perform AI operations. For example, an AI edge device may include an edge AI processor configured to perform "inference" and/or to deploy or utilize a neural network that executes machine learning algorithms locally on the device. As another example, an AI edge device may be configured to collect data on the device, transmit the collected data to a centralized site/device for inference processing to generate an overall inference result, receive the overall inference result from the centralized site/device, and then perform an action based on the received result. In addition, an AI edge device may be part of a group of edge devices (potentially of different types, such as satellites, drones, or IoT devices) that collaborate to achieve federated learning in which each device contributes to a shared model while processing data locally (e.g., to enhance privacy, reduce latency, etc.).

The terms "centralized site", "ground station" and "Mission Operations Centre" (MOC) may be used herein to refer to a control site that includes one or more computing devices (or "centralized devices") that are configured to initiate, provision, store data on (e.g., collected data, data obtained from other sources, augmented data, etc.), enable labeling on, train, communicate with and/or control edge devices. For ease of reference and to focus the description on the relevant features or functionalities, some embodiments are described herein with reference to a "centralized site/device" on earth and one or more edge devices deployed in space. However, it should be understood that the described features and functionalities may be applicable to other types of edge devices, systems, configurations or deployments. As such, nothing in this application should be used to limit the claims or disclosures herein to a centralized site/device on earth and edge devices deployed in space unless expressly recited as such within the claims.

The terms "machine learning algorithm" and "artificial intelligence model" may be used herein to refer to any of a variety of information structures or operations that may be used by a computing device to perform a computation or evaluate a specific condition, feature, factor, dataset, or behavior on a device. Examples of machine learning (ML) algorithms include network models, neural network models, inference models, neuron models, classifiers, random forest models, spiking neural network (SNN) models, convolutional neural network (CNN) models, recurrent neural network (RNN) models, deep neural network (DNN) models, generative network models, ensemble networks, generative adversarial networks, and genetic algorithm models. In some embodiments, a machine learning algorithm may include an architectural definition (e.g., the neural network architecture, etc.) and one or more weights (e.g., neural network weights, etc.).

The term "AI model" may be used herein to refer to a wide variety of information structures that may be used by a computing device to perform a computation or evaluate a specific condition, feature, factor, dataset, or behavior on a device. Examples of AI models include network models, neural network models, inference models, neuron models, classifiers, random forest models, spiking neural network (SNN) models, convolutional neural network (CNN) models, recurrent neural network (RNN) models, deep neural network (DNN) models, generative network models, and genetic algorithm models. In some embodiments, an AI model may include an architectural definition (e.g., the neural network architecture, etc.) and one or more weights (e.g., neural network weights, etc.).

The term "neural network" may be used herein to refer to an interconnected group of processing nodes (or neuron models) that collectively operate as a software application or process that controls a function of a computing device and/or generates an overall inference result as output. Individual nodes in a neural network may attempt to emulate biological neurons by receiving input data, performing simple operations on the input data to generate output data, and passing the output data (also called "activation") to the next node in the network. Each node may be associated with a weight value that defines or governs the relationship between input data and output data. A neural network may learn to perform new tasks over time by adjusting these weight values. In some cases, the overall structure of the neural network and/or the operations of the processing nodes do not change as the neural network learns a task. Rather, learning is accomplished during a "training" process in which the values of the weights in each layer are determined. As an example, the training process may include causing the neural network to process a task for which an expected/desired output is known, comparing the activations generated by the neural network to the expected/desired output, and determining the values of the weights in each layer based on the comparison results. After the training process is complete, the neural network may begin "inference" to process a new task with the determined weights.

The term "inference" may be used herein to refer to a process that is performed at runtime or during the execution of the software application program corresponding to the machine learning algorithm. Inference may include traversing the processing nodes in a network (e.g., neural network, etc.) along a forward path (which may include some backwards traversals) to produce one or more values as an overall activation or overall "inference result". Some embodiments may use inference in live data processing and real-time decision-making to allow edge devices to analyze incoming data locally and generate actionable insights without needing to offload the data to a centralized cloud system. Executing inference on the edge device may reduce latency and bandwidth usage and decisions may be made closer to the data source, which may be particularly advantageous in resource-constrained or intermittent connectivity environments. The edge device may apply the trained machine learning models to real-time data streams to quickly generate contextually relevant results based on the live data.

The terms "image" and "frame" may be used herein to refer to visual data acquired by a camera device or other imaging sensors. An image may include a multitude of color channels and pixels, as well as additional metadata such as timestamps, geolocation information, and sensor-specific data (e.g., focal length, exposure settings). Some embodiments may include an image or frame that includes data captured across various spectra, including visible light, infrared, multispectral, hyperspectral, and synthetic aperture radar (SAR). This data may be used for a range of applications, including geolocation, object detection, and environmental monitoring.

The term "region of interest" (ROI) may be used herein to refer to a specific subset of an image or frame that holds particular significance in a given context. The ROI may vary in size and shape, depending on the application, and may be used for focused analysis, processing, or decision-making. The ROI may encompass an area of the image that includes important features or data, such as a detected object, a specific geographic area, or a relevant pattern. The ROI may also be empty or extended to cover the entire frame.

The term "computational storage" may be used herein to refer to a storage architecture that integrates processing capabilities directly within the storage device. This may allow data to be processed at the storage level without needing to move it to a separate computing unit for analysis, thereby reducing data transfer latency and increasing the overall efficiency of data-intensive tasks. Computational storage devices may include processors, memory, and other components that allow them to execute tasks such as filtering, compression, encryption, or running machine learning models locally. This architecture may be especially beneficial in edge computing environments in which reducing data movement and processing delays are particularly important.

The term "neural network supervisor" (NNS) may be used herein to refer to a system or software component responsible for monitoring, managing, and enhancing the performance of neural networks in real-time. In some embodiments, the NNS may track the operation of various layers and nodes within the neural network to adjust parameters such as learning rates, weight updates, or node activations to improve performance. In some embodiments, the NNS may be responsible for handling model updates, anomaly detection, and resource allocation in edge computing environments in which network resources are limited. In various embodiments, the NNS may operate autonomously or in conjunction with human operators to improve the accuracy and efficiency of machine learning models in production environments.

The term "machine learning operations" (MLOps) may be used herein to refer to a set of operations that unify machine learning system development (Dev) and machine learning system operations (Ops) to streamline the deployment, management, and monitoring of machine learning models in production. MLOps may encompass the entire machine learning lifecycle, including data collection, model training, testing, deployment, and ongoing maintenance. MLOps may also include version control, automation, continuous integration, and monitoring of model performance to ensure reliable and efficient operation of AI models at scale. Some embodiments may use MLOps to facilitate the deployment of machine learning models to edge devices and support their continuous operation and improvement in real-time environments.

The term "LeveragIng Last-miLe data using context-based AutolabelliNg" (LILLIAN) may be used herein to refer to a specialized machine learning framework designed to improve model accuracy by leveraging data collected at the "last mile" of communication networks, often from edge devices. LILLIAN operations may allow for the efficient and accurate labeling of data by using contextual information provided by the edge device or its environment. LILLIAN operations may reduce the need for manual data labeling and enhance the training of machine learning models by using context-based labeling techniques. LILLIAN may be particularly beneficial in environments in which data from edge devices is highly context-dependent, such as remote sensing systems.

The term "triage system" may be used herein to refer to a system that prioritizes tasks, data, or resources based on their urgency or importance. Some embodiments may implement and use a triage system to analyze incoming data or tasks and assign them priority levels and/or determine which tasks should be processed first or require immediate attention. For example, a triage system may prioritize the processing of time-sensitive data (e.g., sensor alerts) over less critical tasks to allow for more efficient resource utilization and faster response times.

Currently, most conventional systems using machine learning algorithms rely on plentiful connectivity to the cloud and remote compute resources to function efficiently, both in terms of performing inference and ongoing machine learning operations (MLOps). These systems may rely on high bandwidth connectivity to transmit raw data from sensors to the cloud for inference and training purposes. Even in cases where inference is performed in the edge device, the system may still need to transmit raw data for ongoing training and MLOps.

However, such conventional systems include significant limitations that could become particularly problematic if they have limited or no connectivity. These limitations may include: difficulty streaming raw data due to bandwidth and/or privacy considerations; difficulty accumulating new training data without direct access to raw data; difficulty accumulating new data from multiple edge devices due to bandwidth and/or privacy considerations; and the cost and practicality of performing MLOps.

Edge computing and computational storage systems may be used to execute machine learning algorithms and perform inference directly at the edge. However, there are some significant challenges associated with doing this that may need to be overcome. One challenge is the difficulty in updating machine learning algorithms at the edge, particularly when access to raw data is restricted due to privacy concerns or bandwidth limitations. Another challenge is that, for inference to occur in computational storage systems, the data must first be stored, which may introduce storage capacity constraints over time. These factors may limit the efficiency of MLOps in edge environments.

For example, in an Industry 4.0 context, a manufacturer may perform image analytics within a factory to detect visual defects in products on a production line. Once defects are identified, the system may trigger actions, such as processing the defective product differently or alerting a line manager. In this scenario, computational storage systems with active triage may protect the manufacturer's data by storing it locally, addressing concerns about data privacy and security. This may be especially important in industrial applications and for national security.

A similar use case applies to space applications in which satellites or spacecraft may monitor phenomena such as solar weather, microgravity experiments, space debris, or meteorites. In such remote environments, ground operators may need real-time alerts when specific events occur, but connectivity constraints could make continuous data transmission impractical.

The various embodiments described herein address these and other technical challenges (and overcome the limitations of conventional solutions) by implementing active triaging and labeling of raw data at the edge through computational storage systems. Some embodiments may reduce the need for human curation of datasets by integrating these labels into the MLOps loop. This combination of active triage, computational storage systems, and MLOps automation may streamline the integration of edge computing into existing workflows to improve efficiency and reduce resource demands.

The various embodiments herein address these challenges (and overcome the limitations of conventional solutions) by using active triaging and labeling of raw data at the edge using a computational storage system coupled with the integration of these labels into the MLOps loop, thereby reducing the requirement for human curation of datasets. Thus, this combination of active triage, computational storage systems, and MLOps automation may enable edge computing to be integrated seamlessly into a user's workflow.

Some embodiments may include computing systems that include a processor or processing system configured to perform active triaging of sensor data before it is stored, thereby improving the effective storage capacity over time. The active triaging of sensor data may classify it into three classes: (1) immediately actionable data; (2) novel data that may be used to generate new labels at the edge for MLOps efficiency; and (3) data that is of no value and may be discarded (thereby saving power, storage, and bandwidth).

Some embodiments may include computing systems that include a processor or processing system configured to perform inference on stored data and/or live data under the control of policy set by an external (e.g., remote) system or user.

The various embodiments may use images at the edge to fine-tune deep neural network models to adapt them to the concrete scenario in which these models are deployed. This method may be referred to as the LeveragIng Last-miLe data using context-based AutolabelliNg (LILLIAN) method. It may be included in the embedded vision system, and it may make use of context and spatio-temporal continuity that is present on contiguous data frames captured by a sensor in a short period of time in order to perform tracking analysis of the objects that are located in the scenes and to identify the frames in which the detector inference has missed these instances of objects that were detected in other nearby frames. These particular scenario frames would be potentially relevant images for enhancing the accuracy of the detection networks that compose the onboard system.

An embodiment of the LILLIAN method may include several submodules that are responsible for providing the diverse functionalities of frame filtering, inference, image modification methods, voting algorithms to validate candidate objects to be labeled, and subsequent auto labeling of these objects in the images. This may provide a reliable system for filtering and labeling images in a fully autonomous way by the system, triaging and reducing the number of images that need to be stored in the system, and at the same time providing high-quality new detections on the saved frames.

The various embodiments may include a neural network supervisor (NNS) component or step to accumulate information about neural network features that are detected during the machine learning network training phase. These features may include or may be included in a feature vector formed by the neural activations of a chosen internal layer or layers within the network. This database of features or feature vectors may be computed for a single network or ensemble of networks (e.g., in an application monitoring solar weather, multiple wavelengths from UV, RGB, and IR to magnetic), and other sensors may be associated with a particular type of event and an ensemble of such networks may supply better insights about such events.

The neural network supervisor database of features accumulated during the neural network training phase may be used to monitor the inference networks as they operate on live sensor data, and the features detected may be compared to the neural network supervisor database to determine whether the event has been seen by the network in the training phase, or if the network is seeing something new and should therefore receive a new label against which data and inference results may be stored. This may be particularly useful where the particular system and/or sensor are very new because the amount of training data available will be relatively low. The ability to auto-generate labels for data in this manner, and subsequently store them automatically against these labels in the device along with statistics, means that the training data-set may be augmented automatically with minimal human intervention. This may reduce the cost and improve the performance compared to the current state of the art solutions.

The ability to triage data on-the-fly as it streams from multiple sensors in the remote device may allow very low bandwidth and low-latency alerts to be sent directly to users, rather than having to incur the delays associated with passing through ground infrastructure.

Some embodiments may include methods performed by a processor or processing system in an edge device (e.g., satellite, etc.) or AI edge device deployed in a resource-constrained environment (e.g., extreme network edge, etc.) for actively triaging and processing data from connected sensors. The operations of the methods may be suitable for environments with limited processing power, memory, and bandwidth. In some embodiments, the operations may include receiving input data from one or more sensors, preprocessing the input data (e.g., noise reduction, contrast enhancement, data compression, etc.) to enhance the input data, classifying the preprocessed input data into a plurality of data categories (e.g., into categories including: (i) actionable data requiring real-time response, (ii) novel data for generating new labels, and (iii) non-essential data to be discarded), performing an action based on the actionable data (e.g., generating a notification or alert in response to detecting the actionable data, etc.), generating labels for the novel data based on an inference performed using a machine learning model stored locally on the edge device, storing the labeled novel data in a non-volatile memory of the edge device for future use in machine learning operations (MLOps), discarding the non-essential data to conserve storage and bandwidth resources, transmitting the generated labels and the labeled novel data to a centralized site or another edge device (the transmission occurring in response to available bandwidth and based on a defined policy), performing inference on the labeled novel data using the machine learning model (which may be configured to detect objects or make predictions based on the labeled novel data), and updating a machine learning model stored on the edge device using the labeled novel data for future inference operations.

For example, an edge device deployed in a remote forest area for wildfire monitoring may receive continuous input from various sensors, such as infrared cameras and temperature sensors. The processor on the edge device may preprocess this data by applying noise reduction to temperature readings and contrast enhancement to the images. The processor may classify the preprocessed data into categories (e.g., the data may be considered actionable if a sensor detects abnormally high temperatures and visible smoke, etc.). The processor may generate a real-time alert to a central monitoring station to provide details such as the location, intensity, and timestamp of the detected event. If the data involves new environmental patterns or wildlife not previously encountered by the model, it may be labeled as novel, stored, and processed locally to create new labels for future learning. Unimportant data, such as stable temperature readings or non-relevant images, may be discarded to conserve storage and bandwidth.

In some embodiments, classifying the preprocessed input data may include determining whether the input data is associated with a specific event type based on a predefined set of criteria. For example, in the wildfire monitoring system, the processor may classify a series of high-temperature readings as actionable if they exceed a critical threshold for a sustained period. Similarly, novel data may be identified if the sensors detect patterns in the landscape or environment that the system has not previously classified (e.g., a new species of animal, etc.).

In some embodiments, performing the action based on the actionable data may include generating an alert for a remote client or an on-board control system. In some embodiments, the alert may include event type information, timestamp, and/or additional data related to the actionable event. For example, in a satellite system monitoring space debris, if a large object approaches a spacecraft, the edge device may generate an alert containing the object's trajectory, estimated time to impact, and the satellite's current position. This alert may be sent to ground control so that operators are able to make decisions regarding evasive actions.

In some embodiments, generating the labels for the novel data may include using a neural network model to analyze the novel data. In some embodiments, the neural network model may be configured to perform object detection or prediction based on the input data. For example, an edge device deployed in an industrial setting may detect a novel defect on a production line. The neural network model may process this data to identify patterns not previously seen, such as cracks or deformities in products, and generate appropriate labels for future training of the model.

In some embodiments, storing the labeled novel data in the non-volatile memory may include associating the labeled novel data with a label generated by the machine learning model and storing the labeled data for use in future machine learning operations. For example, in a traffic monitoring system, when the edge device detects a previously unrecognized type of vehicle, such as a new electric scooter model, the system may generate a label and store it along with other relevant information (e.g., speed, location) for future model updates.

In some embodiments, transmitting the labeled novel data may include applying a prioritization policy to transmit the labeled data to the centralized site based on at least one of the available bandwidths, urgency of the data, or data type. For example, in a satellite-based monitoring system, data about space weather events (e.g., solar flares) may be prioritized for immediate transmission. In contrast, less urgent data, such as ongoing environmental measurements, may be queued for transmission when bandwidth is more readily available.

In some embodiments, the machine learning model may be a neural network model that may be fine-tuned using the labeled novel data. In some embodiments, the model may be fine-tuned locally on the edge device. For example, the edge device may detect a new type of object (e.g., new type of vehicle, new animal, etc.) in the camera feed and fine-tune its existing object detection model using the labeled data to improve future detection accuracy without requiring external server processing.

In some embodiments, performing inference on the labeled novel data may include executing a federated learning operation in conjunction with at least one additional edge device. In some embodiments, the federated learning operations may include aggregating local inference results from the edge device and at least one additional edge device. For example, each drone in a network of drones performing environmental surveillance may locally infer data on wildlife patterns, and the results from multiple drones may be aggregated to improve a centralized machine learning model used by all drones in the fleet.

In some embodiments, updating the machine learning model may include incorporating the labeled novel data into the machine learning model for future inference without human intervention. For example, a satellite monitoring space debris may detect a new type of debris with unusual motion patterns. The edge device may automatically label this novel data and update the machine learning model to recognize and predict similar debris in future observations. The system may incorporate this labeled data without any input from ground control.

Some embodiments may include monitoring the operation of the machine learning model using a neural network supervisor (NNS) that is configured to compare live inference results, or feature vectors extracted from internal network layers, against a precomputed database of features accumulated during a training phase of the machine learning model. For example, a satellite observing solar activity may use the NNS to compare live data from solar flares against a precomputed database of solar flare characteristics. The system may confirm the event type and proceed with standard processing in response to determining that the live data matches a known feature. On the other hand, the NNS may flag data that deviates from known features as an anomaly for further analysis.

In some embodiments, NNS may be configured to identify whether the labeled novel data corresponds to previously known features or represents a new event. In some embodiments, the NNS may be configured to generate a new label for the novel data in response to identifying a new event. For example, in a satellite-based observation system, if the NNS detects an unusual radiation pattern that does not match any known solar or cosmic event, or does not match any solar or cosmic event seen during training, it generates a new label for this novel event. The satellite may store this new label and update its records for future detection of similar phenomena (and improving the overall learning of the system).

In some embodiments, the edge device may be configured to implement and use the LILLIAN method to fine-tune the machine learning model. In some embodiments, the LILLIAN method may include analyzing contiguous data frames captured by the sensors to track objects in the input data, identifying frames in which the machine learning model has missed detecting objects that were detected in nearby frames, and labeling the identified frames for enhancing the accuracy of the machine learning model. For example, in a satellite monitoring space debris, the LILLIAN method may track an object across multiple frames. If the machine learning model misses detecting the object in some frames, the LILLIAN method identifies those frames and labels them accordingly. This may improve the model's accuracy in tracking fast-moving or small debris in future observations.

In some embodiments, the edge device may include a policy-based triage system that is configured to dynamically adjust the classification of the input data and the actions performed based on predefined policies stored on the edge device. For example, a satellite may prioritize actionable data such as extreme weather events over routine environmental readings. The policy-based triage system may adjust the satellite's data processing and transmission priorities based on these predefined policies.

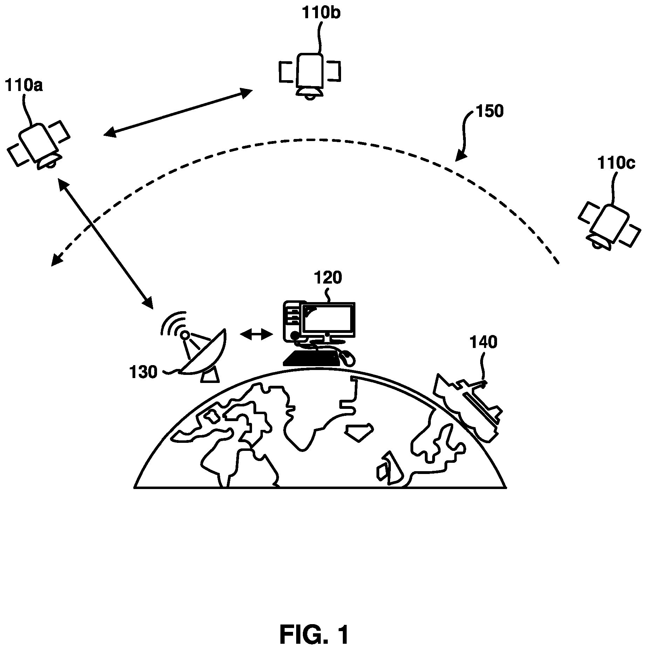

FIG. 1 is an architectural drawing showing an exemplary embodiment in which the edge devices are satellites in space 110a, 110b, 110c, the centralized site 120 is connected to a transmission site 130, and there is a ship 140. Satellites 110a, 110b, and 110c are following the same orbit 150, and satellite 110b is a follow-on satellite relative to satellite 110a. Satellite 110c may be able to take photographs of ship 140, but satellite 110c will not have a downlink capacity sufficient for transmitting photos of ship 140 until satellite 110c is above transmission site 130. Satellites 110a, 110b, and 110c may be capable of transmitting small amounts of information (e.g., textual information, cropped versions of single images) to devices on earth (e.g., computing device) while the satellites are in any location.

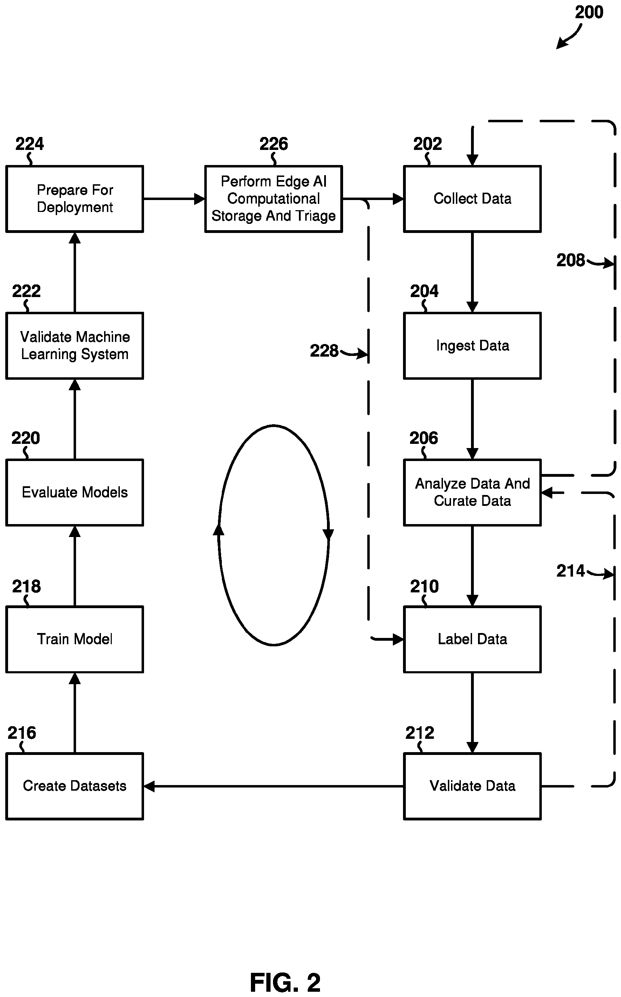

FIG. 2 is a process flow diagram illustrating a method 200 of performing machine learning operations (MLOps) in a resource-constrained edge device in accordance with some embodiments. Method 200 may be performed by a processor that is within an edge device and/or by a processing system that includes one or more processors, components, or subsystems as discussed in this application.

In block 202, the processing system may collect raw data from a sensor stream. In block 204, the processing system may ingest the data. This may prepare the data for downstream machine learning applications by producing indexed data.

In block 206, the processing system may analyze and curate the data. In some embodiments, analyzing the ingested data may include curating the ingested data (e.g., to reduce noise and improve data quality, etc.) by selecting the relevant data and discarding non-relevant data based on a predefined data selection process. The processing system may also produce a stream of feedback data 208 that is sent to the data collection block 202.

In block 210, the processing system may label the data. In some embodiments labeling the relevant data may include using the locally stored machine learning model to assign a classification label to the relevant data. In some embodiments, the classification label may indicate a specific object or event identified in the relevant data.

In block 212, the processing system may validate the labeled data. In some embodiments validating the labeled data may include comparing the labeled data to pre-defined expected outcomes to verify the accuracy of the labeling process and generating a stream of fixes data to adjust the labeling process in the event of inconsistencies. The processing system may also produce a stream of fixes data 214 that is sent to the analyze and curate block 206.

In block 216, the processing system may create datasets that are suitable for use by a machine learning algorithm. In block 218, the processing system may train the model used by the machine learning algorithm. In some embodiments training the machine learning model may include using the created datasets to train a machine learning algorithm to optimize the model parameters, the training comprising adjusting one or more model weights based on the labeled data.

In block 220, the processing system may evaluate one or more trained models (e.g., by comparing them to system key performance indicators). In some embodiments evaluating the trained machine learning model may include comparing the performance of the trained machine learning model to predefined key performance indicators (KPIs), wherein the KPIs comprise accuracy, response time, and error rate.

In block 222, the processing system may validate the machine learning system. In block 224, the processing system may prepare the machine learning system for deployment.

In block 226, the processing system may perform edge AI computational storage and triage. The output of this block may be fed as normal to the collect data block 202. The processing system may also produce a stream of labelled data 228 that is sent to the data labelling block 210. This additional stream may partially automate the labeling process in block 210, which may result in MLOps cost-savings.

In some embodiments triaging the incoming sensor data (e.g., in block 226) may include classifying the incoming sensor data based on a predefined triage policy. For example, the processing system may use the predefined triage policy to determine whether the sensor data is actionable, novel, or non-essential based on predefined thresholds for real-time response or relevance to ongoing machine learning operations.

In some embodiments, the method 200 of performing MLOps in a resource-constrained edge device may include receiving, by a processing system in the edge device, raw data from at least one sensor (e.g., in block 202), ingesting, indexing and formatting the raw data (e.g., in block 204), analyzing the ingested data (e.g., in block 206) to identify relevant data and discarding irrelevant data based on predefined criteria, labeling the relevant data (e.g., in block 210) using a machine learning model stored locally on the edge device to generate labeled data, validating the labeled data (e.g., in block 212) by comparing the labeled data against predefined validation criteria, generating (based on the validation) a stream of feedback data for improving the data collection and labeling process, using the validated labeled data to generate one or more datasets (e.g., in block 216) that are suitable for training a machine learning model, training the machine learning model (e.g., in block 218) using the created datasets, evaluating the trained machine learning model (e.g., in block 220) by comparing the model's output against one or more key performance indicators (KPIs), validating the evaluated machine learning model (e.g., in block 222) to determine whether the model performs accurately with respect to real-time data, and deploying the validated machine learning model on the edge device (e.g., in block 224) for performing inference on incoming sensor data. In some embodiments, the method 200 may further include triaging the incoming sensor data (e.g., in block 226) by classifying the incoming sensor data into categories that include (i) actionable data requiring a real-time response, (ii) novel data requiring labeling and storage for future use, and (iii) non-essential data to be discarded.

In some embodiments, the method 200 may further include performing an action (e.g., generating a notification or alert, etc.) based on the actionable data. In some embodiments performing an action based on the actionable data may include generating an alert that includes one or more of event type, timestamp, and additional metadata related to the actionable data, and transmitting the alert to a remote client or an on-board control system for real-time response. Some embodiments may further include storing the labeled novel data in non-volatile memory of the edge device for future use in machine learning operations. Some embodiments may further include transmitting the labeled novel data to a centralized site or another edge device based on available bandwidth and a defined prioritization policy.

Some embodiments may include performing inference using the machine learning model by, for example, executing the inference process locally on the edge device by applying the machine learning model to the incoming sensor data to detect objects or make predictions based on the labeled data.

Some embodiments may further include updating the machine learning model stored on the edge device (without human intervention) based on the labeled data (e.g., to fine-tune the machine learning model for future inference operations, etc.).

Some embodiments may further include monitoring the performance of the machine learning model using a neural network supervisor (NNS) that compares live inference results, or feature vectors from one or more internal layers of the network, with a precomputed database of features accumulated during a training phase of the machine learning model. In some embodiments the NNS may identify whether the live inference results correspond to previously known features or represent a new event and generate a new label for the novel data in response to identifying a new event.

Some embodiments may further include implementing the LILLIAN method on the edge device to fine-tune the machine learning model by, for example, analyzing contiguous data frames captured by the sensors, identifying frames where the machine learning model missed objects detected in nearby frames, and labeling the missed frames for enhanced model accuracy.

In some embodiments, the edge device may include a policy-based triage system, and the method 200 may further include adjusting the classification of the incoming sensor data and actions performed by the edge device based on predefined policies stored on the edge device. In some embodiments, the policies may include information that may be used for dynamically determining which data is actionable, novel, or non-essential based on real-time environmental factors and resource constraints.

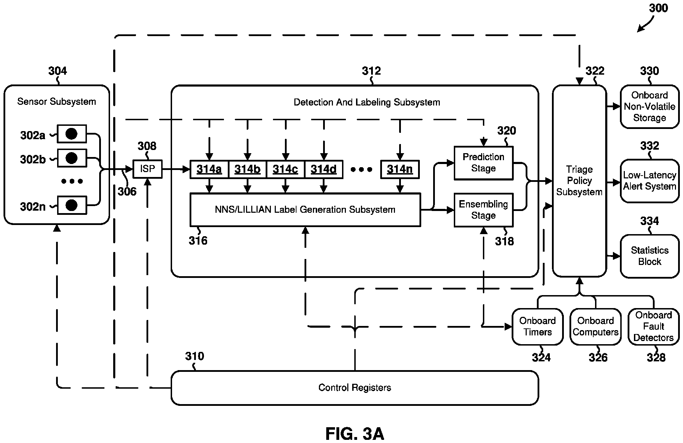

FIG. 3A is a component diagram of an edge device 300 that may be configured to manage the flow of data and events based on predefined policies and real-time conditions in accordance with some embodiments. In the example illustrated in FIG. 3A, the edge device 300 includes input sensors 302a-302n, a sensor subsystem 304, an ensemble of signals 306, an image and signal processing (ISP) block 308 component, control registers 310, a detection and labeling subsystem 312, neural networks 314a-314n, NNS/LILLIAN label-generation subsystem 316, an ensembling stage component 318, a prediction stage component 320, a triage policy subsystem 322, onboard timers 324, onboard computers 326, onboard fault detectors 328, onboard non-volatile storage 330, a low-latency alert system 332, and a statistics block component 334.

The sensor subsystem 304 may include multiple input sensors 302a-302n. The detection and labeling subsystem 312 that includes multiple neural networks 314a-314n, the NNS/LILLIAN label-generation subsystem 316, the ensembling stage component 318, and the prediction stage component 320. The neural networks 314a-314n may be trained using the operations described above with reference to FIG. 2.

The input sensors 302a-302n may provide input signals (e.g., an ensemble of signals 306) that traverses the ISP block 308, the neural networks 314a-314n, the NNS/LILLIAN label-generation subsystem 316, the ensembling stage component 318, and the prediction stage component 320. The outputs of the ensembling stage component 318 and the prediction stage component 320 may be combined into a single data stream that is input into a triage policy subsystem 322 that determines how the data should be handled based on the input and pre-set policies. In some embodiments, the triage policy subsystem 322 may be controlled by control registers 310 and/or may receive and use inputs from onboard timers 324, onboard computers 326, and onboard fault detectors 328 to determine how the data is to be processed. Based on the triage results, the system may store data in onboard non-volatile storage 330, send alerts through a low-latency alert system 332, or update event statistics in a statistics block 334.

In some embodiments, the input sensors 302a-302n may be configured to capture various types of data, including but not limited to visual, thermal, acoustic, or electromagnetic signals. In some embodiments, the input sensors 302a-302n may be positioned to monitor different environmental conditions, equipment states, or processes, etc. to detect events of interest. Examples of input sensors 302a-302n may include cameras, infrared sensors, pressure sensors, temperature sensors, microphones, or specialized sensors designed to capture specific wavelengths, such as ultraviolet or infrared light. The sensors may be used individually or in combination to create a more comprehensive data set for analysis.

In some embodiments, the sensor subsystem 304 may be configured to manage the operation and coordination of the input sensors 302a-302n for synchronization of data collection and aggregation of sensor outputs into a unified data stream. The sensor subsystem 304 may include circuitry to manage power, connectivity, and communication between sensors and other components.

In some embodiments, the ensemble of signals 306 may include a collection of outputs from the various input sensors 302a-302n. These signals may represent different modalities of data, such as video streams, sound waves, temperature measurements, or electromagnetic readings. In some embodiments, the ensemble of signals 306 may be pre-processed to synchronize or align temporal and spatial data.

In some embodiments, the ISP block 308 component may be configured to perform initial processing on the raw sensor data. This may include noise reduction, image enhancement, filtering, and transformation to a standardized format suitable for input to the neural networks 314a-314n and other downstream components. In some embodiments, the ISP block 308 may be configured for real-time processing and to handle high-throughput data streams from multiple sensors. Examples of ISP blocks 308 may include image signal processors used in camera systems for real-time image correction and enhancement, digital signal processors (DSPs) designed for noise reduction in audio signals, or specialized processors designed to handle specific sensor inputs in resource-constrained environments.

In some embodiments, the control registers 310 may be configured to manage the configuration and operation of the various subsystems within the edge device 300. In some embodiments, the control registers 310 may store operational parameters such as sensor settings, data processing thresholds, and alert conditions. In some embodiments, the control registers 310 may allow for dynamic adjustments based on real-time conditions or external inputs. Examples of control registers 310 may include memory-mapped registers used in embedded systems for controlling hardware components and software-configured registers that store settings for data processing operations and sensor management.

In some embodiments, the detection and labeling subsystem 312 may be configured to apply machine learning models, such as the neural networks 314a-314n, to identify patterns, objects, or events of interest in the processed sensor data. In some embodiments, the detection and labeling subsystem 312 may be configured to generate labels for data that may be used for further analysis, triage, or storage.

In some embodiments, the neural networks 314a-314n may be configured to process the incoming data streams by, for example, applying pattern recognition, object detection, or anomaly detection techniques to identify relevant features in the data. In some embodiments, the neural networks 314a-314n may be pre-trained and continually updated through MLOps processes to improve performance in real-time conditions. Examples of neural networks 314a-314n may include CNNs, RNNs, fully connected networks, etc.

In some embodiments, the NNS/LILLIAN label-generation subsystem 316 may be configured to generate labels for the processed data based on inferences made by the neural networks 314a-314n. The labels may indicate the presence of specific objects, events, or conditions, and may be used to trigger alerts or determine storage and processing priorities in the system.

In some embodiments, the ensembling stage component 318 may be configured to combine outputs from multiple neural networks or machine learning models to generate a more accurate prediction or classification. The ensembling operations may include, for example, using weighted voting or averaging techniques to improve decision accuracy and reliability.

In some embodiments, the prediction stage component 320 may be configured to generate predictions about future events or conditions based on the current input data and historical trends. In some embodiments, the prediction stage component 320 may be used to anticipate potential issues or opportunities for proactive actions or responses.

In some embodiments, the triage policy subsystem 322 may be configured to determine how the processed data should be handled based on predefined rules and real-time inputs. The triage policy subsystem 322 may classify data into different priority levels, triggering immediate alerts for high-priority events or storing lower-priority data for later analysis. The triage policy subsystem 322 may also manage the transmission of data to external systems based on bandwidth and storage availability.

In some embodiments, the triage policy subsystem 322 may be configured to process different event types, including LILLIAN events, NNS events, ensemble events, and sensor malfunctions. In some embodiments, the triage policy subsystem 322 may be configured to label the data in response to detecting or receiving commands from onboard computers 326 or faults detected by fault detectors 328.

In some embodiments, the triage policy subsystem 322 may be configured to notify the onboard systems and remote clients via low-latency alerts (e.g., sent using a TCP/IP based communications channel, etc.) in response to detecting or predicting high-priority events. The low-latency alerts may include relevant event details, such an event type, event type count, timestamp, associated data and events (e.g., events that occurred before/after the alerted event), predicted events, geographic information (e.g., latitude and longitude, etc.), region of interest, summary of statistics, a statistics update summary, etc.

In some embodiments, the onboard timers 324 may be configured to manage the timing of various operations within the edge device 300, such as sensor data collection, data processing intervals, or alert notifications. The onboard timers 324 may also be used to coordinate real-time activities across different subsystems.

In some embodiments, the onboard computers 326 may be configured to perform high-level decision-making, manage system resources, or provide additional computational support for data processing tasks. For example, the onboard computers 326 may execute control algorithms, manage communications with external systems, and oversee the operation of the neural networks 314a-314n and other subsystems.

In some embodiments, the onboard fault detectors 328 may be configured to monitor the health and status of the edge device 300 and its components. The onboard fault detectors 328 may identify sensor malfunctions, hardware failures, or other anomalies and may trigger alerts or system reconfigurations to maintain operational integrity.

In some embodiments, the onboard non-volatile storage 330 may be configured to store processed data, labels, and events for future use. The onboard non-volatile storage 330 may be configured to retain important data even in the event of failure, power loss, system reboots, etc. Data stored in onboard non-volatile memory may be used for long-term analysis, model updates, regulatory compliance, etc.

In some embodiments, the edge device 300 may be configured to store non-high-priority data or non-critical events/event data in non-volatile memory in association with new or existing labels based on the NNS/LILLIAN detection operations.

In some embodiments, the edge device 300 may be configured to categorize and store predicted events according to their priority. The system may accumulate and track relevant statistics, such as the number of alerts and the frequency of specific event types, for all stored events (e.g., for both alerts and non-alert events). These statistics, along with the associated data, may be stored in onboard non-volatile memory for future reference.

In some embodiments, the low-latency alert system 332 may be configured to send immediate notifications to external systems or users in response to high-priority events. Alerts may be transmitted using communication protocols that are well suited for low-latency communications.

In some embodiments, the statistics block component 334 may be configured to aggregate and track data about system performance, events, and alerts. The statistics may be used for system diagnostics, performance optimization, or compliance reporting, and may be stored in onboard non-volatile memory for future reference.

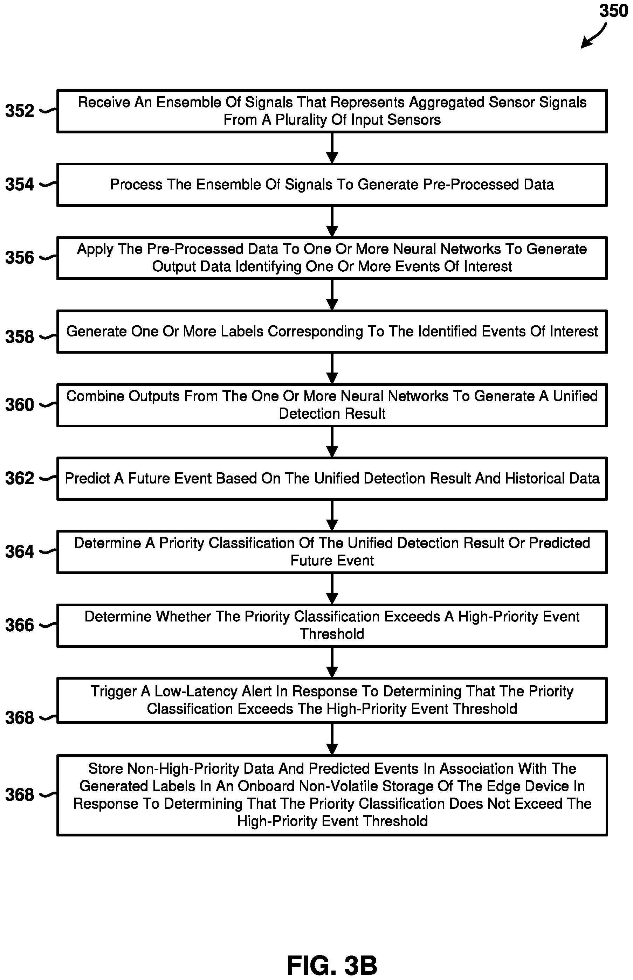

FIG. 3B is a process flow diagram illustrating a method 350 of managing the flow of data and events in accordance with some embodiments. Method 350 may be performed by a processor that is within an edge device and/or by a processing system that includes one or more processors, components, or subsystems as discussed in this application.

In block 352, the processing system may receive an ensemble of signals that represents aggregated sensor signals from a plurality of input sensors. For example, the processing system may aggregate data from a set of diverse sensors, such as cameras, infrared (IR) sensors, thermal sensors, pressure sensors, and microphones. These sensors may each capture a different modality of data, such as visual information, heat signatures, sound waves, or environmental changes. The processing system may synchronize the data streams from these sensors to ensure temporal and spatial alignment, allowing for comprehensive analysis of the environment or objects being monitored. By combining these signals into an ensemble, the system may be able to detect patterns or events that a single sensor could not capture as effectively. For example, in a wildfire detection system, a camera may detect smoke, an IR sensor may capture rising heat levels, and a microphone may pick up the sound of crackling flames. The aggregated signals may provide a more accurate representation of the event and/or allow for faster and more reliable detection and response.

The processing system may further preprocess the ensemble of signals to reduce noise, enhance signal clarity, or transform the data into a unified format suitable for input to machine learning models or downstream processing components. Neural networks or predictive algorithms may then use this aggregated signal to identify events of interest, classify objects, or generate predictions about future occurrences based on the combined sensor data.

In some embodiments, receiving the ensemble of signals that represents aggregated sensor signals from the plurality of input sensors may include receiving a signal that represents aggregated sensor signals from at least one or more of a camera, an infrared sensor, a pressure sensor, a temperature sensor, a microphone, or a sensor configured to detect ultraviolet or infrared light. In some embodiments, receiving the ensemble of signals that represents aggregated sensor signals from the plurality of input sensors may include receiving a signal that synchronizes data collection from the plurality of input sensors and aligns temporal and spatial characteristics of the sensor signals.

In block 354, the processing system may process the ensemble of signals to generate pre-processed data. For example, the processing system may apply noise reduction techniques to remove unwanted artifacts from sensor data, such as filtering out high-frequency noise from vibration sensors or smoothing temperature readings that fluctuate due to external environmental factors. The processing system may also synchronize data streams from sensors with different sampling rates, such as aligning timestamps between a high-frequency camera feed and slower temperature sensor readings so that the data is temporally consistent. In addition, the system may transform the raw data into standardized formats, such as converting units of measurement (e.g., from Celsius to Kelvin) or resizing image data for consistency across various inputs.

The processing system may also perform feature extraction, isolating relevant patterns or elements from the raw data. For example, in visual data from cameras, the system may detect edges or objects, while in sound data from microphones, it may filter out background noise and amplify certain frequencies.

In some embodiments, the method may further include processing the ensemble of signals in real-time to handle high-throughput data streams from the plurality of input sensors. For example, in some embodiments, the processing system may apply parallel processing techniques to manage multiple sensor inputs simultaneously so that data from high-frequency sensors, such as cameras or vibration sensors, may be processed without causing bottlenecks. The system may use dedicated hardware accelerators, such as digital signal processors (DSPs) or neural processing units (NPUs), to quickly filter and enhance the incoming signals. It may also implement data buffering and prioritization algorithms to handle variations in sensor data rates to allow more critical or time-sensitive signals (e.g., heat spikes from an infrared sensor) to be processed immediately and queue less urgent signals (e.g., ambient temperature readings). In addition, in some embodiments, the processing system may use real-time data compression techniques to reduce the volume of data without losing essential information and/or for faster processing and lower bandwidth requirements.

In block 356, the processing system may apply the pre-processed data to one or more neural networks to generate output data identifying one or more events of interest. For example, the processing system may input pre-processed sensor data, such as readings from temperature sensors or images captured by cameras, into a trained convolutional neural network (CNN) for tasks such as object detection, pattern recognition, or anomaly identification. The CNN may analyze visual data, detecting objects or features like vehicles in a traffic monitoring system or defects in industrial equipment. For time-series data, such as temperature fluctuations or machine vibrations, the system may use a recurrent neural network (RNN) to identify temporal patterns, such as a sudden increase in temperature or unusual vibrations, which could signal equipment malfunctions or other events requiring attention.

In some embodiments, applying the pre-processed data to one or more neural networks to identify events of interest may include using multiple types of networks, such as a CNN, RNN, or DNN, depending on the nature of the data and the complexity of the analysis required.

In block 358, the processing system may generate one or more labels corresponding to the identified events of interest. For example, the processing system may classify an event detected by a satellite's sensors, such as space debris or solar activity, and generate a label such as "debris detected" or "solar flare detected." This label may be accompanied by additional metadata, including the time, satellite location, and confidence level associated with the detection. As another example, if the system identifies an anomaly in data from environmental sensors, such as an increase in radiation levels or unexpected temperature fluctuations in the satellite's vicinity, it may generate a label such as "radiation spike" or "thermal anomaly." These labels help categorize the detected event for further action, such as alerting ground operators, logging the data, or triggering satellite maneuvers.

In some embodiments, generating one or more labels corresponding to the identified events of interest may include generating one or more labels based on inference results produced by one or more neural networks. For example, the processing system may pass data through a CNN to identify objects in satellite images, producing a label such as "object: space debris" or "object: spacecraft" depending on the classification. Similarly, an RNN processing time-series data from radiation sensors might identify patterns indicating anomalies, such as a "radiation surge" label if the system detects irregular radiation levels over time. In another example, a DNN might analyze space weather data to predict solar events and produce a label like "coronal mass ejection warning."

In block 360, the processing system may combine outputs from one or more neural networks to generate a unified detection result. For example, the processing system may receive data from multiple neural networks, each analyzing different modalities of input data collected by satellite sensors, such as infrared imagery, ultraviolet (UV) data, and magnetic field readings. The processing system may aggregate these outputs to form a single detection result that reflects the combined analysis. For example, in a satellite monitoring space weather, one neural network processing UV data might detect an increase in solar activity with moderate confidence. In contrast, another network analyzing magnetic field fluctuations might detect the same solar event with higher confidence. The system may combine these outputs to conclude that a solar flare is imminent and assign an increased confidence score based on both sources. This unified result may allow for more accurate predictions of space weather events and/or improve decision-making regarding satellite operations.

In some embodiments, combining outputs from the neural networks to generate the unified detection result may include combining outputs from one or more neural networks using weighted voting or averaging techniques. For example, the processing system may assign different weights to each neural network based on its reliability or confidence level in detecting certain patterns. If a CNN analyzing image data provides a detection result with 90% confidence, and an RNN analyzing time-series data from sensors provides a 70% confidence score for the same event, the processing system may assign a higher weight to the CNN output. By averaging these weighted scores, the system might generate a unified detection result with an overall confidence level of, for example, 85%. This allows the system to factor in the varying strengths and weaknesses of each network, leading to a more accurate and reliable detection result.

In block 362, the processing system may predict a future event based on the unified detection result and historical data. For example, the processing system may analyze data from previous satellite observations, such as patterns in solar activity or space weather, and compare them to the current detection result. If the system detects similar conditions, such as increased solar radiation or magnetic disturbances, it may predict a solar flare or coronal mass ejection (CME) event. In a satellite communication system, the processing system might predict potential communication blackouts based on a combination of the current sensor data and past incidents where similar atmospheric conditions disrupted satellite transmissions.

In some embodiments, predicting the future event based on the unified detection result and the historical data may include generating a prediction based on detected patterns, trends in historical data, and the unified detection result. For example, the processing system may analyze historical data from satellites monitoring space debris and detect a recurring pattern of debris trajectories. Using this information, the system may predict when and where a debris field will intersect a satellite's orbit to allow operators to take evasive action. Similarly, in a satellite-based environmental monitoring system, the processing system may use historical wildfire data combined with current infrared and temperature readings to predict the likelihood of a wildfire spreading to a new region to allow for preemptive firefighting measures.

In block 364, the processing system may determine a priority classification of the unified detection result or predicted future event. For example, the processing system may classify an event detected by a satellite's sensors, such as a potential collision with space debris, as high priority, triggering an immediate response like adjusting the satellite's orbit. A lower-priority classification might be assigned to routine data collection events, such as periodic weather monitoring, which may be stored for later analysis without requiring urgent action.

In some embodiments, determining the priority classification of the unified detection result or the predicted future event may include determining the priority classification based on inputs from one or more of an onboard timer, an onboard computer, or an onboard fault detector. For example, the processing system may increase the priority of a detection event if an onboard fault detector signals a malfunction, such as a sensor failure or overheating. The onboard computer might also adjust the priority if the event occurs during a critical mission phase, such as a satellite's re-entry or close approach to another object in space.

In some embodiments, determining the priority classification of the unified detection result or the predicted future event may include dynamically determining the priority classification based on available bandwidth and storage capacity. For example, the processing system may lower the priority of non-essential data transmission, such as routine environmental monitoring, if the satellite is operating under limited bandwidth conditions. Conversely, if storage capacity is nearing full utilization, the system may prioritize urgent data, such as space weather alerts, while discarding lower-priority data to conserve resources.

In block 366, the processing system may determine whether the priority classification exceeds a high-priority event threshold. For example, the processing system may assess the classification of a detected event, such as a potential collision with space debris or a severe solar flare, and compare it to a predefined threshold. If the event surpasses the high-priority threshold, the system may initiate an immediate response, such as sending an alert to ground control or adjusting the satellite's trajectory. For lower-priority events, such as routine sensor calibrations, the system may queue the event for later processing or storage.

In some embodiments, the method may further include applying machine learning operations (MLOps) to update one or more neural networks. For example, the processing system may collect newly labeled data from recent detections, such as space debris or solar flares, and use this data to retrain the onboard neural networks. This continuous updating may improve the system's ability to detect future events with higher accuracy. For example, if a neural network identifies a novel anomaly, such as an unusual radiation pattern, the system may incorporate this new information into its learning model to enhance future event detection capabilities.

In block 368, the processing system may trigger a low-latency alert in response to determining that the priority classification exceeds the high-priority event threshold. In some embodiments, the low-latency alert may include at least one or more of event type information, timestamp information, geographic information, or event summary information.

In block 370, the processing system may store non-high-priority data and predicted events in association with the generated labels in an onboard non-volatile storage of the edge device in response to determining that the priority classification does not exceed the high-priority event threshold. In some embodiments, the method may further include storing, in the onboard non-volatile storage, event statistics that include an alert generation frequency or generated alert type information.

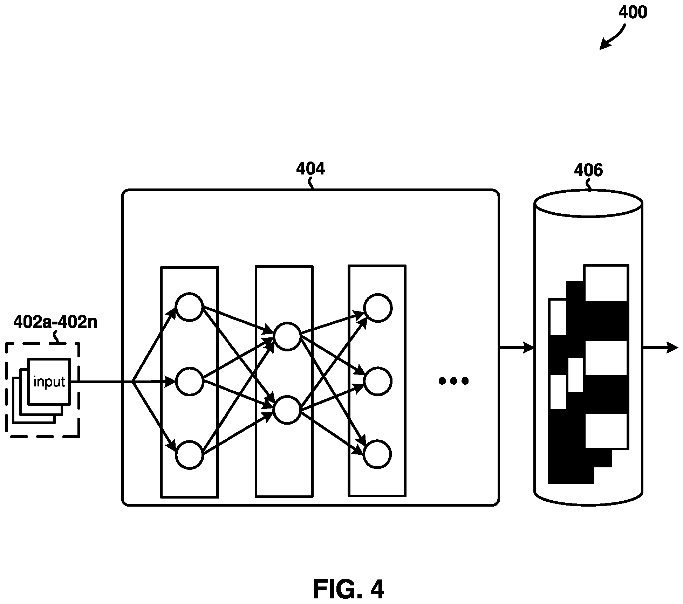

The triage policy subsystem 322 may be supplied with a database of features that have been detected during the training of the machine learning network (e.g., in block 218 with reference to FIG. 2). The details of how the database of features is associated with the training images and features is shown in FIG. 4.

FIG. 4 is a component diagram of a NNS training system 400 that is suitable for use with the various embodiments. In the example illustrated in FIG. 4, the system includes training data 402a-402n, a neural network 404 being trained, and layer activation pattern (LAP) database 406. The NNS training system 400 may be configured to generate activation patterns for different layers of the network 404 during training. These activation patterns may be stored in the LAP database 406 and used during runtime to compare with results from inferences performed by the same trained network 404. The activation patterns may include or relate to the feature vectors formed by the neural activations from specific internal layers within the network and/or may represent how the network processes input data at different stages.

The augmented training process illustrated in FIG. 4 may differ from the training process in block 218 (illustrated and described with reference to FIG. 2) because it may, for example, compute inference using the network being trained 404 on training data 402a-402n to generate the LAP database 406 for runtime comparison with the results of inferences performed using the same trained network in the detection and labelling subsystem 312 by the triage policy subsystem 322 (illustrated and described with reference to FIG. 3A).

While a standard training process may adjust the network weights using training data to improve its performance, the augmented operations illustrated in FIG. 4 also capture detailed activation patterns within the network's layers during training. These activation patterns may serve as reference points for the NNS that allow it to monitor and validate the behavior of the neural network during inference in the detection and labeling subsystem 312. The triage policy subsystem 322 (illustrated in FIG. 3A) may use these comparisons during runtime for improved decision-making.

Some embodiments may include a processing system configured to perform inference and monitor neural network behavior using layer activation patterns. In some embodiments, the processing system may receive training data from a plurality of training datasets and train a neural network using the training data. In some embodiments, the processing system may train the neural network by performing inference on the training data to generate a plurality of LAPs that each correspond to activations generated by different layers of the neural network during a forward pass of the inference. The processing system may store these LAPs in a LAP database so that each layer activation pattern in the LAP database is associated with the corresponding input and output from the training data.

The processing system may finalize the trained neural network and the LAP database and store both for use during runtime inference. When a runtime input is received, the system may perform inference using the trained neural network and generate a runtime LAP corresponding to the activations of the network layers. The processing system may then compare the runtime LAP with the precomputed LAPs stored in the LAP database. Based on the comparison, the system may determine if the runtime input corresponds to a previously encountered training input. If a match is found, the system may generate a decision using the matching precomputed LAP. If no match is found, the system may flag the input as novel data, generate a new label, and update the LAP database with this new information. The updated LAP database may be used during future runtime inference to enhance decision-making capabilities and neural network accuracy by comparing newly received inputs to both precomputed and updated LAPs.

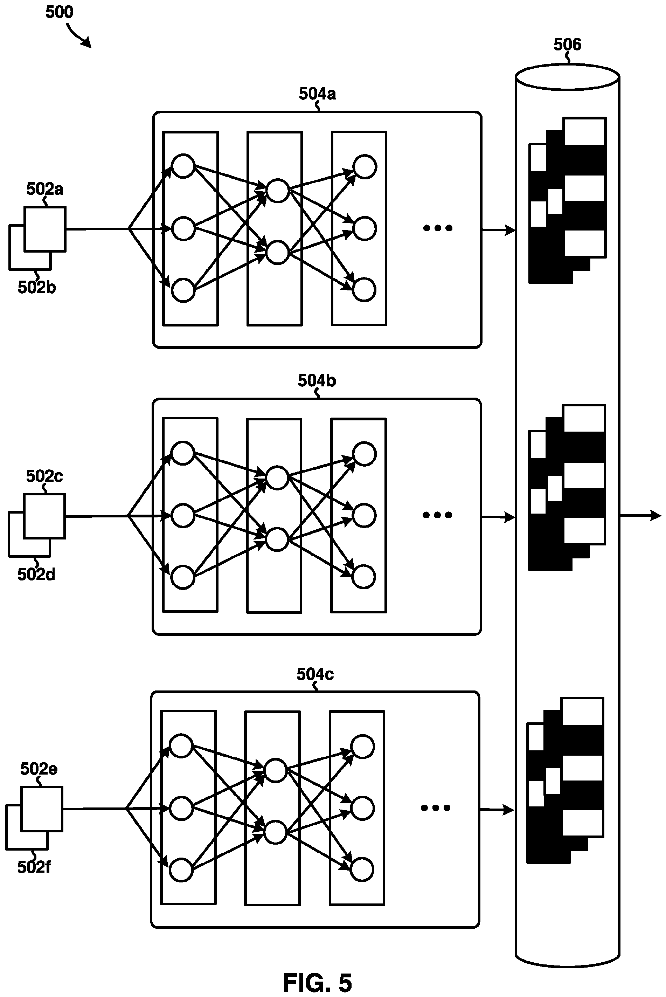

FIG. 5 is a component diagram of an NNS training system 500 that illustrates the training process for multiple ensemble networks to allow for the monitoring of real-world events across diverse instruments and spectral bands. In the example illustrated in FIG. 5, the system 500 uses multiple input training image databases 502a-502f to train several neural networks 504a-504c.

Each input training image database 502a-502f may provide training data for a corresponding neural network 504a-504c. The training process may generate features from these different spectral bands and instruments, which may be compiled into a single multi-spectral/instrument NNS database 506 that serves as a comprehensive reference and allows the system to monitor the behavior of the ensemble networks during runtime.

The neural networks 504a-504c may be trained on these heterogeneous datasets and configured to work together to detect and analyze events in real time. The features compiled into the NNS database 506 may allow the system to generate labels, issue alerts, and store associated data and statistics when significant events are detected. The system 500 may provide enhanced accuracy and comprehensive event detection across multiple data sources and is highly adaptable for use in environments in which data is gathered from many different types of instruments or sensors.

Some embodiments may include a processing system configured to train and deploy an ensemble of neural networks for multi-spectral and multi-instrument event detection and monitoring. The system may retrieve training data from a plurality of input training image databases, each corresponding to different spectral bands or instrument types. The processing system may train each neural network using the respective training data from its associated database and perform inference to extract features specific to that spectral band or instrument type. These extracted features and associated metadata (e.g., labels, spectral band information, timestamps, etc.) may be stored in a multi-spectral/instrument database. The processing system may compile the features from all neural networks into a unified multi-spectral/instrument database that provides a comprehensive view of data from multiple spectral bands and instrument types. During runtime, the system may monitor real-time data collected from sensors corresponding to different spectral bands or instruments. The system may perform inference on the real-time data using the trained ensemble of neural networks to extract real-time features, which may be compared with the compiled features stored in the multi-spectral/instrument database. If significant events are detected, the system may generate alerts and store the real-time features along with any event details and newly generated labels. The system may periodically retrain the neural networks based on newly labeled data from runtime events for continuous adaptation and improvement in event detection across multiple spectral bands and instrument types.

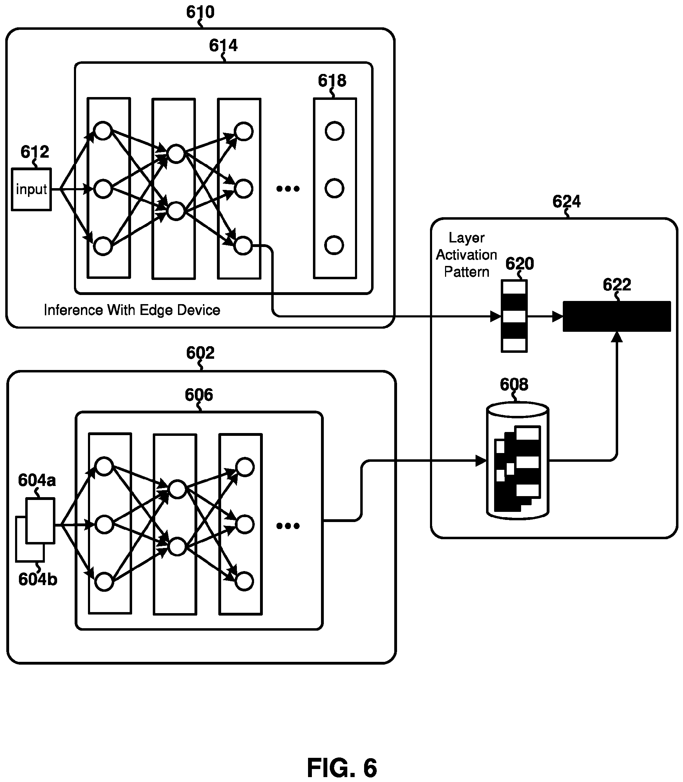

FIG. 6 is a component diagram illustrating how the NNS monitoring may be implemented based on comparisons of the pre-computed NNS database with live inference results of a NNS training a single network that is suitable for use with the various embodiments. The offline network training process shown in block 602 may perform inference on training data 604a-604b in order to generate a layer activation pattern database 608 for runtime comparison against the instantaneous LAP 620 in order to establish whether the image presented to the live inference network 614 was part of the training data set used to train the inference network via the predicted classes 618 generated by the neural network monitoring. The predicted classes 618 may include the decision (<classl> or <class2> with confidence level). The training network 606 and live network 614 may be identical and only the LAP database may need to be transmitted to the edge device for dynamic monitoring. The layer activation patterns may be stored, with corresponding images, indexed by LAP. The comparison of the live LAP 620 with the precomputed LAP database 608 may be performed by comparison logic 622. This may return a "found" result, which may indicate images with matching LAP. Alternately, it may return a "not found" result with a dependability warning, indicating that a new label should be generated by the LILLIAN block 316 (illustrated and described with reference to FIG. 3A). In an embodiment, the inference may be performed by a CogniSAT device.

Said another way, an offline network training process 602 may perform inference on training data 604a-604b to generate a LAP database 608. During runtime, the LAP database 608 may be used to compare the stored LAP values with the instantaneous LAP 620 generated by the live inference network 614. The edge device may use the results of this comparison to determine whether the input data presented to the live inference network 614 matches data from the original training set. The training network 606 and live network 614 may be identical or similar so that the LAP database may be transmitted to the edge device for dynamic monitoring. The live inference network 614 may process input data 612 to produce predicted classes 618, which may include decisions such as classifications (e.g., <classl> or <class2>) with an associated confidence level. During runtime, the live network 614 may generate a LAP 620, which may be compared against the precomputed LAP database 608 to determine whether the LAP from the live inference matches a known pattern in the database.

In some embodiments, a processing system in an edge device (e.g., satellite, etc.) may configured to monitor neural network inference using LAP. The processing system may receive input data from a sensor or data stream and perform inference using a live inference neural network. During this inference, the system may generate a predicted class and confidence level for the input data while simultaneously generating a live LAP that represents the neural network's internal activations.

The processing system may retrieve a precomputed LAP from a LAP database, which was generated by performing inference on training data during an offline training process using a neural network similar to or identical to the live inference neural network. The processing system may compare the live LAP with the precomputed LAP to determine whether the input data corresponds to a known pattern from the training data. If the LAPs match, the system may return a "found" result, indicating the input matches a known pattern. If no match is found, the system may return a "not found" result and generate a dependability warning, signaling that the input is novel and requires attention.

The system may then automatically generate a new label for the novel input data using a label-generation subsystem that includes a LILLIAN block. The newly labeled input data may be stored in onboard non-volatile memory and used to retrain the live inference neural network (improving its ability to detect novel patterns, etc.). The LAP database may also be updated with the new LAP so that future comparisons account for this novel data.

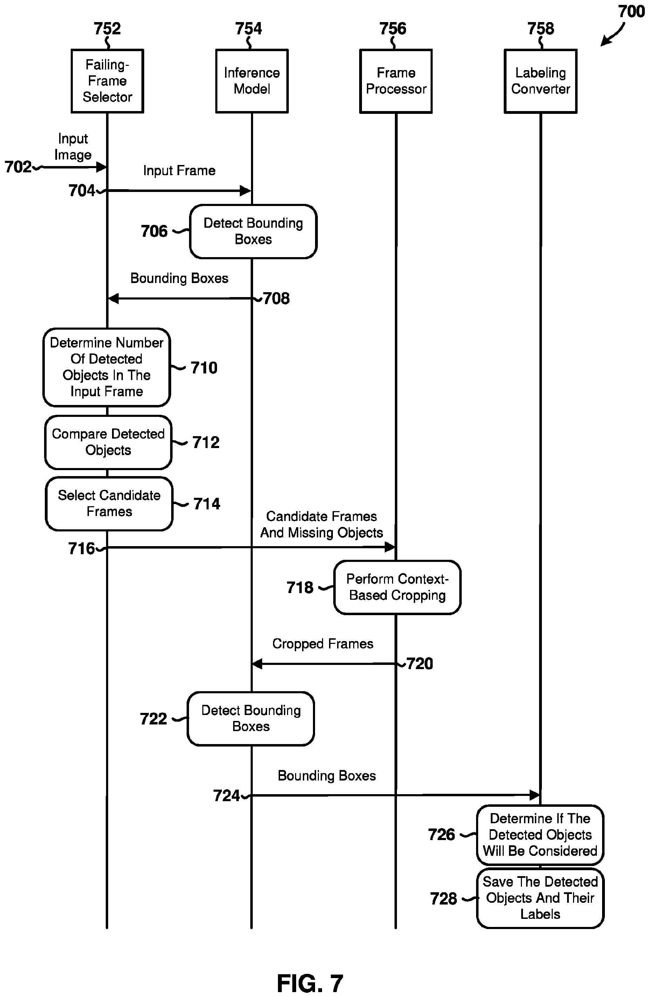

FIG. 7 is an activity diagram illustrating a method 700 of applying the LILLIAN labeling method in accordance with various embodiments. As described with reference to FIG. 3A, the LILLIAN labeling method may be performed by the LILLIAN block 316 under the control of the neural network supervisor 310, and optionally, the triage policy subsystem 322.

Referring to FIG. 7, and with reference to FIGs. 1-6, in operation 702, the failing-frame selector receives the input image. In operation 704, the failing-frame selector sends the original input frame to the inference model for detection. In operation 706, the inference model may detect the bounding boxes for the input frame. In operation 708, the inference model sends the detected bounding boxes to the failing-frame selector.

In operation 710, the failing-frame selector determines the number of detected objects in the input frame. The failing-frame detector may use two previous input frames to determine the number of detected objects and decide which frame will be considered for the context-based cropping method. Additionally, the failing-frame detector may use future frames as part of the determination where the number of future frames is configured by a user and only once frame will be considered.

In operation 712, the failing-frame selector may compare the detected objects in the current frame with the previous and future frames. In operation 714, the failing-frame selector may be able to correctly select the frames that would be considered as candidate frames based on the detection result of the current and previous results. In operation 716, the failing-frame selector may send the candidate frames and the missing objects to the frame processor.

In operation 718, the frame processor may perform context-based cropping to the candidate frames in order to produce modified output frames where the region of interest is localized. In operation 720, the frame processor may send the cropped frames to the inference model for detection.

In operation 722, the inference model may detect the bounding boxes for the cropped frames. In operation 724, the inference model may send the newly detected bounding boxes to the labeling converter.

In operation 726, the labeling converter may determine whether the detected objects will be considered based on a confidence threshold. In operation 728, the labeling converter may save the detected objects and their labels (e.g., in a specific annotation format).

In some embodiments, the processing system may be configured to apply the LILLIAN labeling method for improved object detection and labeling in a neural network system using context-based frame selection and cropping. In some embodiments, the processing system may receive an input image from a sensor or data stream, apply the input image to an inference model to generate bounding boxes for the detected objects within the input image, determine the number of objects detected in the input image, compare the detected objects to those detected in prior frames and future frames, and select one or more candidate frames based on the comparison of the input image with prior and future frames. In some embodiments, the processing system may select the candidate frames for further processing based on incomplete or missing object detection results.

The processing system may perform context-based cropping on the candidate frames to generate modified frames that focus on regions of interest and apply the modified frames to the inference model for additional object detection. The inference model may generate new bounding boxes for objects in the cropped frames. The processing system may use the newly detected bounding boxes to determine whether the detected objects meet a predefined confidence threshold and generate labels for the objects in the modified frames that meet the confidence threshold. In some embodiments, the processing system may store the labels in a specific annotation format for subsequent machine learning operations.

In some embodiments, the processing system may store the labeled data and the corresponding objects in a non-volatile memory for future use in training, inference, or system logging. In some embodiments, the processing system may update the layer activation pattern database and object labels based on the detected objects in the modified frames. In some embodiments, the processing system may use the updated data for future comparisons during object detection operations.

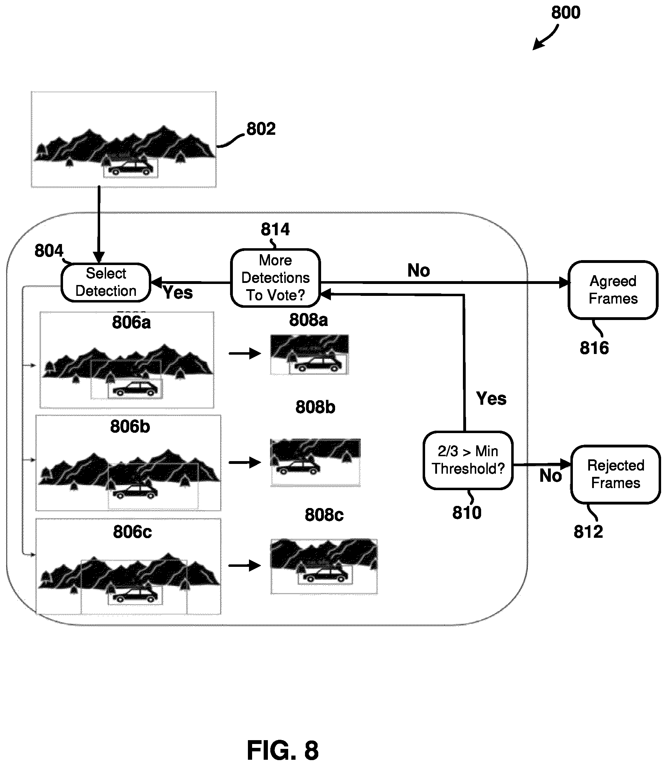

FIG. 8 is a process flow diagram illustrating a method 800 of performing the LILLIAN voting system in order to evaluate the results of LILLIAN auto-labeling and to limit the false positive detections. As described with reference to FIG. 3A, the LILLIAN labeling process may be carried out by the LILLIAN block 316 under the control of the neural network supervisor 310, and optionally, the triage policy subsystem 322.

Referring to FIG. 8, and with reference to FIGs. 1-7, in block 802, the processing system may receive an input image 802 that includes the newly detected objects by LILLIAN. In block 804, the processing system may select an ensemble of voters 806a-806c to perform a random crop that includes the bounding box area of the input image 802 in order to produce the new bounding boxes 808a-808c. The processing system may also calculate the Intersection over Union (IoU) between the original bounding boxes in image 802 and the new bounding boxes 808a-808c.

In block 810, the processing system may determine whether the number of voters who have confirmed that such detection exists is greater than a configured threshold (e.g., a threshold of 2/3 as shown in FIG. 8).

In response to determining that the number of voters who have confirmed that such detection exists is not greater than the configured threshold (i.e., determination block 810 = "No"), then in block 812 the processing system may reject the input frame and its associated bounding box.

In response to determining that the number of voters who have confirmed that such detection exists is greater than the configured threshold (i.e., determination block 810 = "Yes"), then in block 814 the processing system may determine whether there are more detections to be processed.

In response to determining that there are more detections to be processed (i.e., determination block 814 = "Yes"), then the processor continues at block 804.

In response to determining that there are no more detections to be processed (i.e., determination block 814 = "No"), then in block 816 the processing system may accept the input frame and its associated bounding box.

In some embodiments, the processing system may be configured to evaluate detected objects using a voting-based system. The processing system may receive an input image that includes one or more detected objects generated by an auto-labeling system, select an ensemble of voters (each configured to process the input image by performing a random crop around the bounding box area of the detected object to generate one or more new bounding boxes), generate new bounding boxes for each detected object in the input image based on the random crop performed by each voter, calculate an Intersection over Union (IoU) between the original bounding box of each detected object and the newly generated bounding boxes produced by the ensemble of voters, and determine whether the number of voters confirming the detection of the object is greater than or equal to a configured threshold. In some embodiments confirming the detection may be based on whether the IoU exceeds a predefined similarity threshold.

The processing system may reject the input image and its associated bounding box for the detected object in response to determining that the number of voters confirming the detection is less than the configured threshold. On the other hand, the processing system may accept the input image and its associated bounding box for the detected object in response to determining that the number of voters confirming the detection is greater than or equal to the configured threshold.

The processing system may determine whether there are additional detected objects in the input image that require evaluation, and if so, repeat the steps of selecting an ensemble of voters, generating new bounding boxes, calculating IoU, determining voter consensus, and rejecting or accepting the detected object based on the consensus result. The processing system may store the accepted input image and its associated bounding boxes in memory for subsequent processing or analysis.

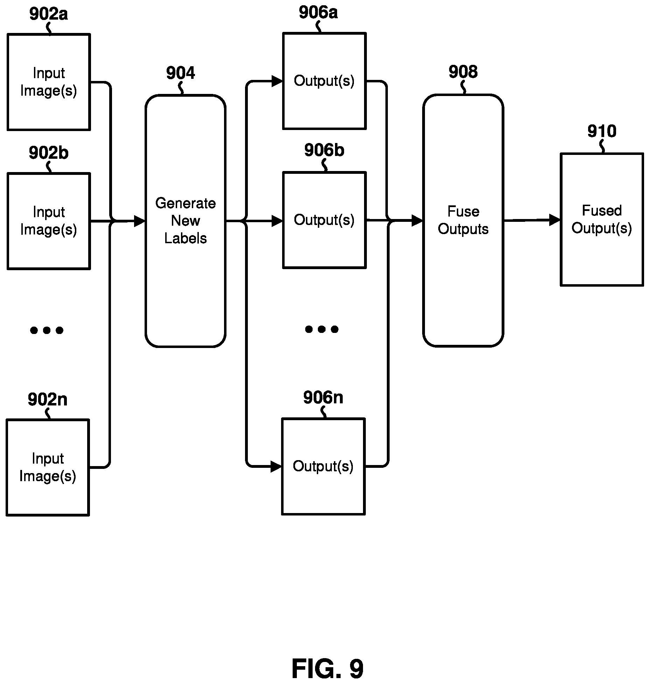

FIG. 9 is a process flow diagram illustrating a method 900 of image processing performed by the multistage LILLIAN module in which the input data is captured from different imaging sensors. As described with reference to FIG. 3A, the LILLIAN module is implemented in hardware by the detection and labeling subsystem 312 under the control of the neural network supervisor 310, and optionally, the triage policy subsystem 322.

Referring to FIG. 9, and with reference to FIGs. 1-8, the input images 902a-902n may be provided to the LILLIAN module. In block 904, the LILLIAN module may process the images and generate new labels. The new labels in the outputs 906a-906n from the LILLIAN module may then be visualized. In block 908, the processing system may fuse the outputs 906a-906n together by removing the redundant bounding boxes. The fused output 910 is the optimized output that includes both the new labels performed by the LILLIAN and the combined information from different outputs.

In some embodiments, the processing system may be configured to use input data from multiple imaging sensors to perform image processing operations. The processing system may receive a plurality of input images from a plurality of imaging sensors. The input images may be captured from different imaging modalities and include a plurality of images (e.g., 902a-902n). The processing system may include a multistage labeling module that is configured to process the plurality of input images to generate one or more new labels for objects or features detected in each of the input images. In some embodiments, the processing may include identifying objects in the images and generating bounding boxes around detected objects in the images. In some embodiments, the multistage labeling module may generate a plurality of labeled outputs (e.g., 906a-906n) corresponding to the input images. Each labeled output may include bounding boxes and new labels for detected objects or features.

In some embodiments, the processing system may be configured to visualize the labeled outputs. The labeled outputs may represent the detected objects and their associated bounding boxes for each of the input images. The processing system may fuse the plurality of labeled outputs from the different imaging sensors. In some embodiments, the fusing may include identifying redundant bounding boxes across the plurality of labeled outputs and removing redundant bounding boxes to produce a single set of non-overlapping bounding boxes that correspond to the detected objects across the input images.

In some embodiments, the processing system may be configured to generate a fused output (e.g., 910) that includes the new labels generated by the multistage labeling module and the consolidated information from the different labeled outputs. The fused output may include both the new labels and the combined bounding boxes of detected objects. The processing system may store the fused output in memory and/or provide the fused output to a downstream processing module, which may use fused output to refine its decision-making or analysis operations based on the labeled and combined information from the different imaging sensors.

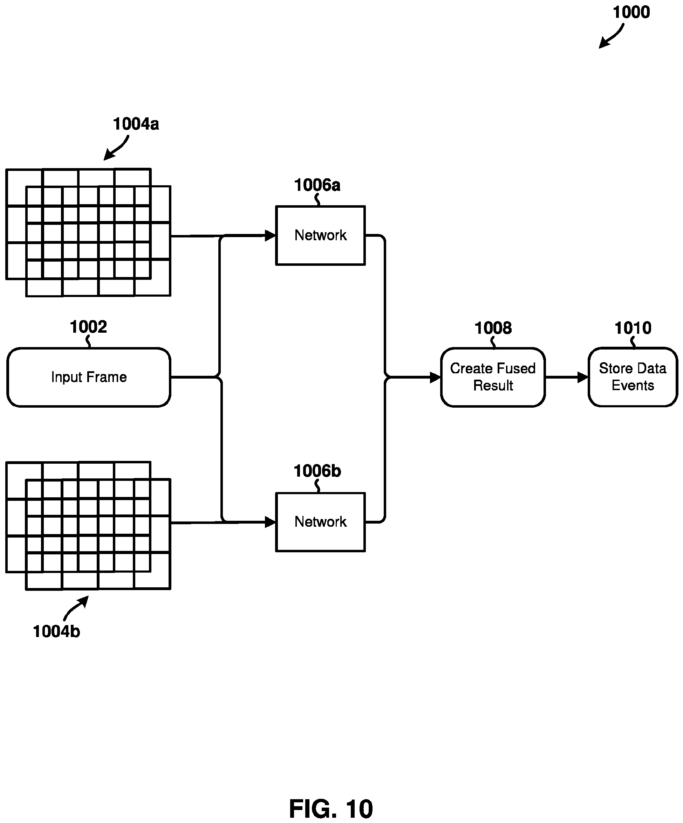

FIG. 10 is a process flow diagram illustrating a method 1000 of training and/or testing the prediction network using a multimodal method of fusing multiple data modalities. Referring to FIG. 10, and with reference to FIGs. 1-9, the input frames 1002, and their corresponding features 1004a and 1004b, are fed respectively to the networks 1006a and 1006b in order to predict and extract specific event properties using images of different wavelengths and their corresponding time series data. In block 1008, the processing system may implement an ensemble method in order to use the output results from the different models (e.g., regression or classification output). The processing system may create the final fused result. In block 1010, the processing system may store all the data events in non-volatile storage (e.g., solid state disk) for further usage and processing.

In an embodiment, the process shown in FIG. 10 may be applied in a flare prediction network (e.g., EoF) to predict weather flares associated with coronal mass ejections (CME) using an ensembling subsystem 318. As described with reference to FIG. 3A, the ensembling subsystem 318 fuses the results from multiple networks 314a, 314b, ... 314n, as shown in FIG. 10, under the control of the neural network supervisor 310 and, optionally, the triage policy subsystem 322. This ensembling process may improve accuracy by combining predictions from multiple networks rather than relying on a single network.

In some embodiments, the processing system may be configured to use multimodal data fusion to train, test, and/or use a prediction network. The processing system may use the prediction network to, for example, predict weather flare events based on multimodal input frames and their associated features. Such predictions may be used to forecast solar phenomena such as coronal mass ejections (CMEs).

In some embodiments, the processing system may receive input frames that are each associated with a different modality and include corresponding features. In some embodiments, the input frames may include images captured at different wavelengths and corresponding time-series data. The processing system may extract a first set of features from the input frames using a first prediction network configured to process images of a first modality, perform inference on the first set of features using the first prediction network to generate first prediction results, perform inference on the second set of features using a second prediction network configured to process images of a second modality or time-series data to generate second prediction results (e.g., corresponding to specific event properties, etc.), and apply an ensemble method to the first prediction results and the second prediction results. The ensemble method may fuse the prediction results from the different prediction networks to generate a final fused result that represents a combined prediction based on multiple data modalities. The processing system may store the input frames, corresponding features, and final fused result in non-volatile storage for future processing and reference.

In some embodiments, the processing system may be configured to use the stored data to train the first prediction network and the second prediction network. In some embodiments the training may include updating the prediction networks based on labeled training data to improve the accuracy of event property predictions.

In some embodiments, the processing system may be configured to monitor real-time input data during runtime, receive additional input frames from the different modalities, process the input frames using the trained first prediction network and the trained second prediction network to predict real-time event properties, perform fusion of real-time prediction results using the ensemble method to generate real-time fused predictions based on the real-time input data, and store real-time data events in non-volatile storage. In some embodiments, the stored events may include the real-time input frames, features, and fused prediction results.

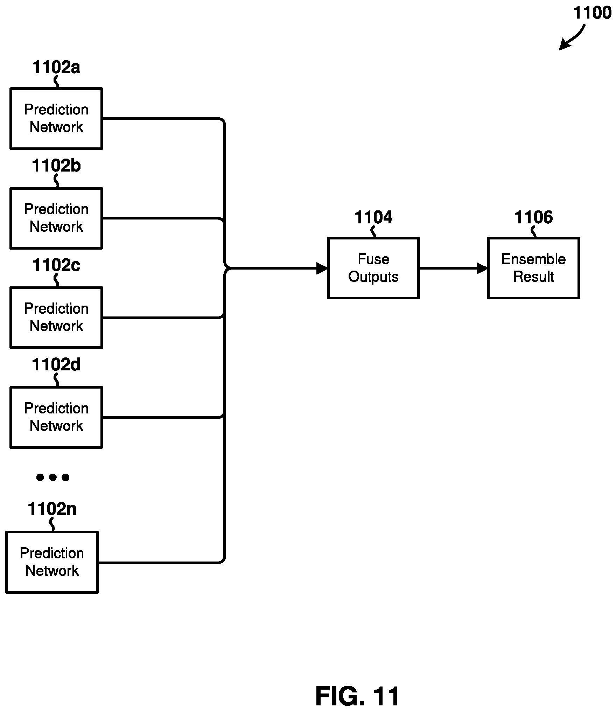

FIG. 11 is a process flow diagram illustrating a method 1100 of using an ensemble of prediction networks. As described with reference to FIG. 3A, the ensembling subsystem 318 fuses the results from multiple networks 314a-314n, in the manner shown in FIG. 10, under the control of the neural network supervisor 310 and, optionally, the triage policy subsystem 322. The method 1100 may use multiple prediction networks 1102a-1102n, each trained separately on data captured from different wavelengths or modalities. For example, there may be multiple parallel instruments (cameras) 302a-302n, each covering different parts of the electromagnetic spectrum, such as infrared (IR), magnetic, ultraviolet (UV), and X-ray. Each of these instruments may provide data to separate neural networks processed by hardware subsystems (e.g., 314a-314n).

Referring to FIG. 11, and with reference to FIGs. 1-10, In block 1104, the processor may fuse the outputs from these prediction networks using the ensembling subsystem 318, under the control of the neural network supervisor 310 and, optionally, the triage policy subsystem 322, to generate an ensemble result 1106 (e.g., including predicted classes or predicted values). Combining the outputs from these different sensors and processing them through multiple networks may enhance the accuracy of event detection. This approach may benefit, for example, CME observation aboard the VIGIL satellite and other applications in which combining data from different spectral bands improves detection performance.

In some embodiments, the processing system may be configured to perform inference using an ensemble of prediction networks. The processing system may initialize a plurality of prediction networks that are each trained on a different data modality or wavelength, receive input data corresponding to the respective data modality or wavelength for each prediction network in the plurality of prediction networks, perform inference on the input data using each respective prediction network in the plurality of prediction networks to generate a plurality of network-specific prediction results (each prediction result corresponding to a predicted class, value, or feature generated by the respective prediction network), collect the network-specific prediction results from each prediction network in the plurality of prediction networks, and fuse the network-specific prediction results from the plurality of prediction networks by applying an ensemble method to generate an ensemble prediction result. The ensemble operations may include aggregating the prediction results using a predefined fusion algorithm such as weighted averaging, majority voting, and stacking.

The processing system may generate a final ensemble prediction result based on the fused network-specific prediction results. In some embodiments, the final ensemble prediction result may include a predicted class, predicted value, or combined output derived from the plurality of prediction networks. The processing system may store the final ensemble prediction result in a non-volatile memory for further usage or analysis. The processing system may monitor the performance of the plurality of prediction networks over time and adjust the ensemble fusion subsystems (e.g., by retraining one or more of the prediction networks or modifying the fusion algorithm) in response to detected changes in prediction accuracy or data distribution.

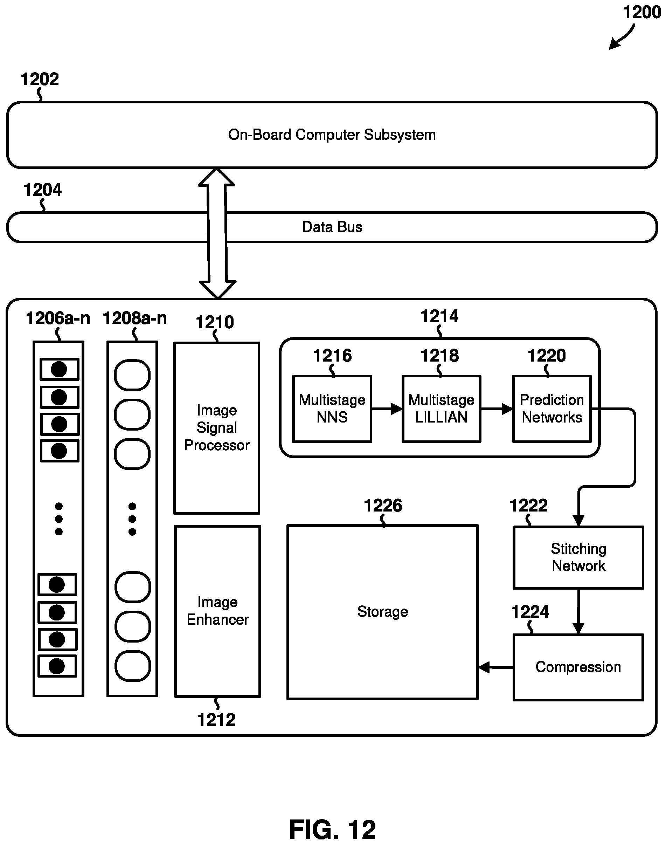

FIG. 12 is a component diagram of the triage/predictor subsystem 1200 that is suitable for use with the various embodiments. As described with reference to FIG. 3A, the detection and labeling subsystem 312, together with the triage policy subsystem 322, may implement the method outlined in FIG. 12.

Referring to FIG. 12, and with reference to FIGs. 1-11, in some embodiments, the triage/predictor subsystem 1200 may be interfaced with an on-board computer subsystem 1202 via data bus 1204. The input images are captured from different instruments 1206a-1206n, which provide raw data 1208a-1208n that will be passed through the image signal processer 1210. The image signal processor 1210 may perform image enhancement, noise reduction, color correction, etc., in order to reduce the amount of data that needs to be transmitted. Thus, the image signal processor may optimize the bandwidth usage and reduce the latencies of the data transmission.

The image enhancer 1212 may enhance the image quality by applying different image preprocessing techniques (e.g., contrast enhancement, sharping, noise reduction, blurring). The purpose of the image signal processer 1210 and the image enhancer 1212 is to generate high-quality images before passing the images to the algorithms for processing. The triage/prediction subsystem 1214 includes the multistage NNS 1216, the multistage LILLIAN 1218, and the prediction networks 1220. The stitching network 1222 may stitch together the multiple overlapping images in order to form a large panorama. The compression component 1224 may compress the large panorama (e.g., by applying a compression algorithm) in order to reduce transmission time, memory allocation, etc.. The storage component may store the compressed image in non-volatile storage (e.g., solid state disk). The various embodiments may change the order of the processing blocks based upon the mission aim.

In some embodiments, the processing system may be configured to perform image processing and prediction operations that include receiving input images captured by a plurality of instruments (that provide raw image data, etc.), preprocessing the raw image data (e.g., for noise reduction, color correction, image enhancement to reduce data transmission bandwidth and latency, etc.), enhancing the preprocessed images using an image enhancer (e.g., which may apply contrast enhancement, sharpening, and blurring to generate high-quality images for further processing, etc.), and providing the enhanced images to a triage/predictor subsystem, that includes a multistage neural network supervisor (NNS) configured to perform inference and generate labels or classifications for the input images, a multistage LILLIAN module configured to perform context-based auto-labeling and identify candidate frames or regions for further analysis, and a prediction network configured to forecast events based on the labeled or classified image data.

The processing system may stitch overlapping input images using a stitching network that merges the images into a panorama output, use a compression algorithm to compress the panorama output or individual images (e.g., to reduce memory allocation and transmission time, etc.), store the compressed images in non-volatile storage, and/or transmit (e.g., via a data bus, etc.) the processed images, labels, and predictions to an on-board computer. In some embodiments, the processing system may be configured to dynamically adjust the sequence of image processing operations based on mission-specific requirements.

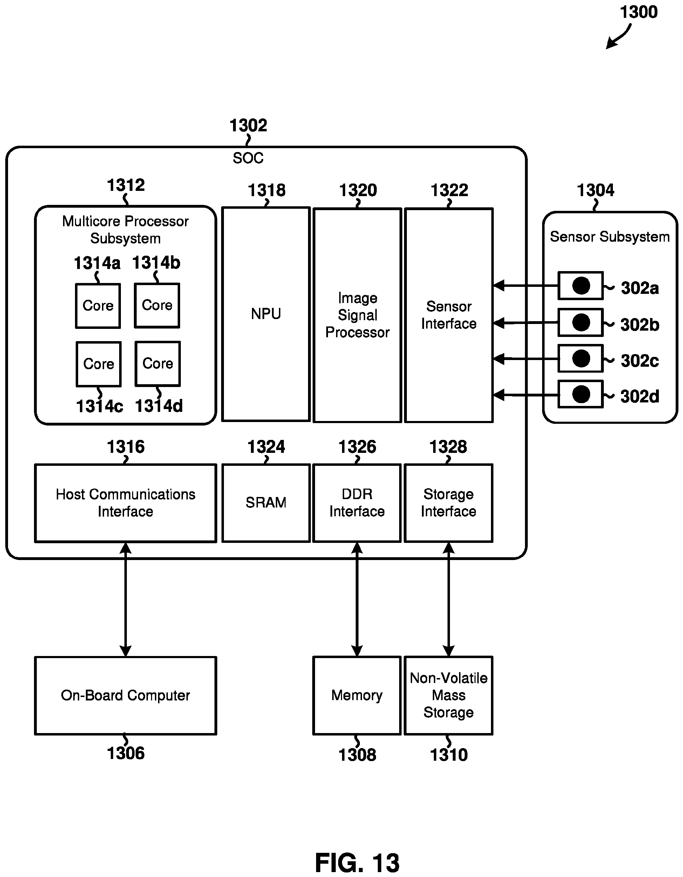

FIG. 13 is a component diagram of the processing hardware 1300 that is suitable for use with the various embodiments. A typical hardware embodiment consists of a system on chip (SoC) 1302, which is associated with a sensor subsystem 1304, an interface to an on-board computer 1306, memory 1308 (e.g., DDR memory), and non-volatile mass-storage 1310. In an embodiment, the system on chip 1302 may include a multicore processor subsystem 1312 that includes multiple processor cores 1314a-1314d, a host communications interface to an on-board computer or other host 1316, a neural processing unit (NPU) 1318, an image signal processor (ISP) 1320, a sensor interface 1322, onboard SRAM 1324, DDR interface 1326, and an interface to external non-volatile mass-storage 1328. The neural processing unit 1318 may be required to accelerate the processing of the neural networks and the triage of incoming data while the operation of the elements of the system on chip 1302 and the peripherals are controlled by software running on the system on chip's 1302 multicore processor subsystem 1312.

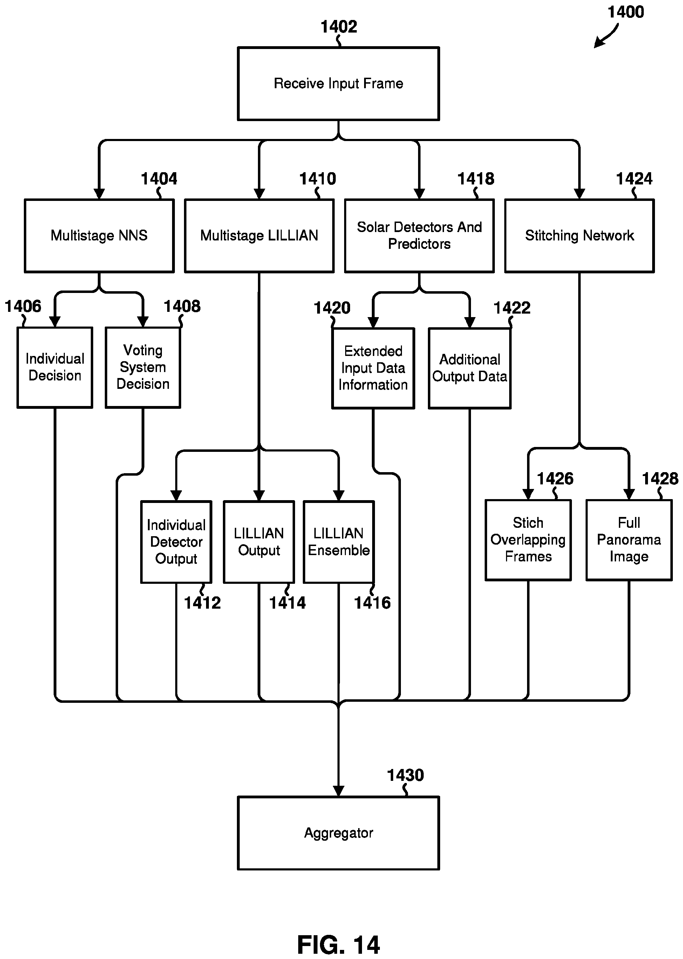

FIG. 14 is a process flow diagram illustrating a method 1400 of storing events to non-volatile storage (e.g., solid state disk). In block 1402, the processor receives an input frame. In block 1404, the processor sends the input frame to the multistage NNS 1404. In block 1406, the multistage NNS may output the individual decision provided by each model. In block 1408, the multistage NNS generates an output that represents the voting system decision where all the decisions of the models are merged and fused together at the decision stage level to provide a final decision.

In block 1410, the Multistage LILLLIAN provides three main outputs. The first output is the individual detector output 1412, which represents the outputs of each individual detector. The second output is the LILLIAN output 1414. The third output is the LILLIAN ensemble 1416, which refers to the results of the LILLIAN block of every single network where the output represents the ensemble results of LILLIAN blocks by merging and fusing the detected bounding boxes performed by each single LILLIAN block.

In block 1418, the solar detectors and predictors implement models that are designed for solar event detection and prediction. As the ensemble method is presented in each network, two main output types may be provided by these networks. These are the extended input data information block 1420 that is used for single networks, and the additional output data block 1422. This provides output from single models and the standard fused output.

In block 1424, the stitching network is applied in order to handle the problem of frames overlapping. It may provide meaningful data by stitching all the overlapping frames together in block 1426. It may also provide a full panorama image as output in block 1428.

In block 1430 the outputs of the previous blocks are aggregated.

In some embodiments, the processing system may be configured to receive an input frame from a sensor or data stream and send the input frame to a multistage neural network supervisor (NNS) that evaluates the input frame using a plurality of models and generates individual decisions for the input frame. In some embodiments, each individual decision may be provided by a respective model in the multistage NNS. The processing system may fuse the individual decisions using a voting system that merges and fuses the individual decisions from the plurality of models to produce a final decision.

In some embodiments, the processing system may process the input frame using a multistage LILLIAN module that generates an individual detector output representing the output of each LILLIAN detector applied to the input frame, a LILLIAN output representing the combined detection result for the input frame, and a LILLIAN ensemble output representing the fusion of detected bounding boxes from each LILLIAN block.

In some embodiments, the processing system may process the input frame using solar event detectors and predictors that detect and predict solar events by generating an extended input data information block representing detailed data for single networks, an additional output data block representing output from single models and a standard fused output and applying a stitching network to the input frame to resolve overlapping frames. The stitching network may be configured to generate stitched frame data by merging overlapping frames and a full panoramic image by stitching all overlapping frames together.

In some embodiments, the processing system may be configured to aggregate the outputs from the multistage NNS, multistage LILLIAN module, solar event detectors, and the stitching network into a final aggregated output and store the final aggregated output in non-volatile memory (e.g., solid-state disk, etc.) for future retrieval and analysis. In some embodiments, the processing system may continuously process and store input frames received from the sensor in real-time.

Some embodiments include methods of actively triaging data in a computational storage system deployed in an edge environment. In some embodiments, the methods may include receiving input from at least one sensor, processing the input using at least two neural networks, detecting objects in the input, labelling the input, making predictions and performing ensembling, and triaging the input. In some embodiments, triaging the input may include determining that the input needs to be stored, and storing the input to onboard non-volatile storage. In some embodiments, triaging the input may include determining that the input triggers an alert, generating the alert, and sending the alert to a low-latency alert system. In some embodiments, triaging the input may include determining that the input is associated with an event, and updating a statistic associated with the event.

Further embodiments may include a computing device (e.g., edge device, etc.) having a processing system configured with processor-executable instructions to perform various operations corresponding to the methods summarized above. Further embodiments may include a non-transitory processor-readable storage medium having stored thereon processor-executable instructions configured to cause a processing system to perform various operations corresponding to the method operations summarized above. Further embodiments may include a computing device having various means for performing functions corresponding to the method operations summarized above.

The various embodiments may enable the use of proactive triage, which may allow alerts, storage, and auto-labelling to be delegated to edge devices, rather than being controlled remotely (e.g., by the cloud). Further, the various embodiments may transform how data is gathered at the edge, and they may automate the laborious, expensive, and time-consuming task of keeping MLOps up-to-date across a network of edge devices. Ultimately, the various embodiments may allow more and more of the training workload to be delegated to the edge devices and environments as new low-power devices (e.g., analog array-multipliers (AAMs)) become available in the future.

The various embodiments may provide many benefits. These include: lower power and bandwidth requirements because storage is only performed when it is required; lower memory requirements because only the data that is needed is stored (i.e., it uses a Triage-First-Store-Later (TFSL) method rather than the more common Store-First-Inference-Later (SFIL) method); triage provides low-latency proactive updates to users which are not otherwise possible with traditional storage devices where the storage device has to be remotely directed to perform inference before any updates may be sent; and auto-labelling at the edge may allow new classes to be consolidated at the edge and easily inserted semi-automatically into the MLOps workflow.

Some embodiments may improve edge computing capabilities by combining AI-driven inference, computational storage, and proactive data triaging to improve resource usage and performance, particularly in environments with limited connectivity and power (e.g., in extreme network edge, etc.).

Some embodiments may combine active data triage and labeling at the edge using computational storage systems with machine learning operations (MLOps) to reduce human curation of datasets. Some embodiments may reduce the need for centralized cloud processing and bandwidth by embedding intelligence in the edge device to allow real-time processing of actionable and novel data. Some embodiments may classify input data into actionable, novel, and non-essential categories, reduce power, storage, and bandwidth usage by discarding non-essential data at the edge (reducing unnecessary data transfers), and/or enhance resource efficiency by prioritizing real-time responses and training AI models using locally labeled novel data.

Some embodiments may use context-based auto-labeling to improve object detection accuracy in machine learning models. Some embodiments may fine-tune models by analyzing contiguous data frames, identifying missed objects, and labeling those frames autonomously. Some embodiments may reduce false positives through ensemble voting systems to improve the accuracy and reliability of machine learning predictions.

Some embodiments may use precomputed LAPs generated during training to compare live inference results with known data and automatically generate new labels for previously unseen events to reduce reliance on manual input and augment the training dataset. Some embodiments may dynamically adjust data processing and transmission priorities based on predefined policies stored on the edge device. Some embodiments may allow edge devices to operate autonomously, with minimal external intervention, by controlling which data is actionable, novel, or non-essential in real-time. Some embodiments may support federated learning operations that allow multiple edge devices to collaboratively train and improve AI models without transmitting raw data to a centralized server. Some embodiments may aggregate inference results from multiple devices to improve machine learning performance in resource-constrained environments. For all the above reasons, the embodiments may improve the performance and functioning of the devices on which they are installed or executed.

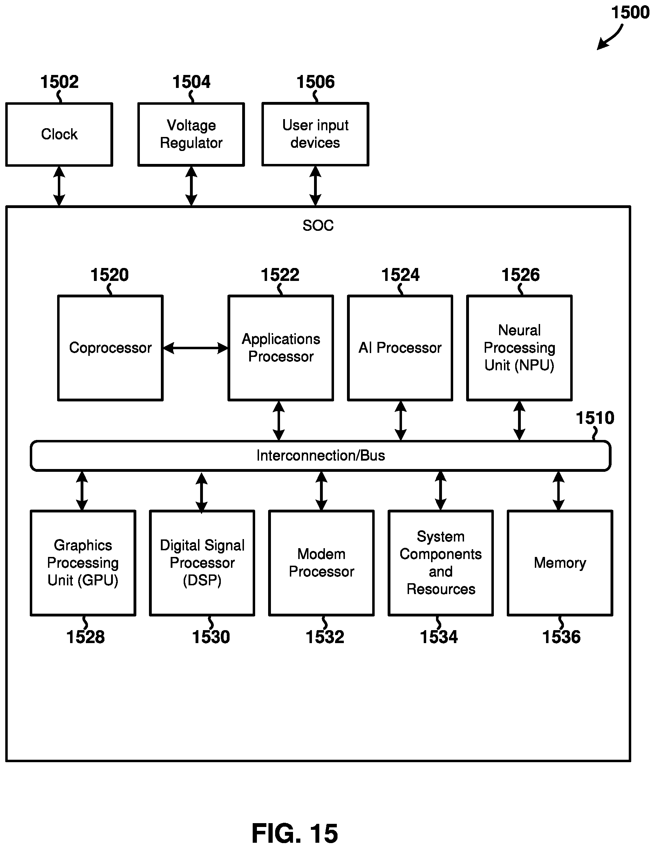

Various embodiments may be implemented in single-processor or multiprocessor computer systems, including a system-on-chip (SoC) or system-in-package (SiP). FIG. 15 illustrates an example computing system or SoC 1500 architecture that may be included in edge devices implementing the various embodiments.

In the example illustrated in FIG. 15, the SoC 1500 includes a clock 1502, voltage regulator 1504, and user input devices 1506 (e.g., touch-sensitive displays, microphones, cameras). The SoC 1500 integrates various processors, including a coprocessor 1520 (e.g., vector coprocessor), applications processor 1522, AI processor 1524, and neural processing unit (NPU) 1526. Additional components include the graphics processing unit (GPU) 1528, digital signal processor (DSP) 1530, modem processor 1532, memory 1536, and system components and resources 1534. The processors and components may be interconnected via an interconnection/bus 1510, which may utilize advanced interconnect technologies such as high-performance networks-on-chip (NoCs), reconfigurable logic arrays, or bus architectures like CoreConnect or AMBA.

In some embodiments, any of the processors 1520-1532 in the SoC 1500 may function as the central processing unit (CPU), microprocessor unit (MPU), or arithmetic logic unit (ALU). The SoC 1500 may execute software programs, performing arithmetic, logical, control, and input/output (I/O) operations as specified by program instructions (e.g., processor-executable instructions, etc.). One or more of the coprocessors 1520 may be configured to assist the CPU in these operations.

Each processor 1520-1532 may include one or more cores, and each processor/core may perform operations independent of the other processors/cores. For example, the SOC 1500 may include a processor that executes a first type of operating system (e.g., FreeBSD, LINUX, etc.) and a processor that executes a second type of operating system (e.g., OS X, etc.).

In some embodiments, any or all of the processors 1520-1532 may be part of a processing cluster, such as a heterogeneous processor cluster architecture. In some embodiments, any or all of the processors 1520-1532 may operate as part of CPU clusters, with interconnected nodes (e.g., cores, processors, SoCs) working in coordination to perform computational tasks. Each node may have its own operating system, CPU, memory, and storage. A computational task may be divided among these nodes, allowing for parallel processing. The results from each node's computation may be combined to produce a final result (often faster compared to a single processor). CPU clusters also offer greater reliability and resilience to failure due to their distributed nature.

The SoC 1500 includes various system components and resources for managing sensor data, wireless transmissions, analog-to-digital conversions, and other specialized tasks, such as performing AI inference or precomputing hidden states for frequently used input text. These components may include power amplifiers, voltage regulators, oscillators, phase-locked loops, data controllers, memory controllers, and peripheral bridges. The system components also facilitate communication with peripheral devices such as cameras, microphones, external displays, and wireless communication modules.

The SoC 1500 may further include an input/output (I/O) module (not shown) for interfacing with external resources such as the clock 1502, voltage regulator 1504, user input devices 1506, and wireless transceivers (e.g., Bluetooth, cellular transceivers). These external resources may be shared among multiple processors or cores within the SoC 1500.

In addition to the SoC 1500, various embodiments may be implemented in other computing systems, including those with single or multicore processors, multiple processors, or hybrid configurations that integrate different processing technologies.

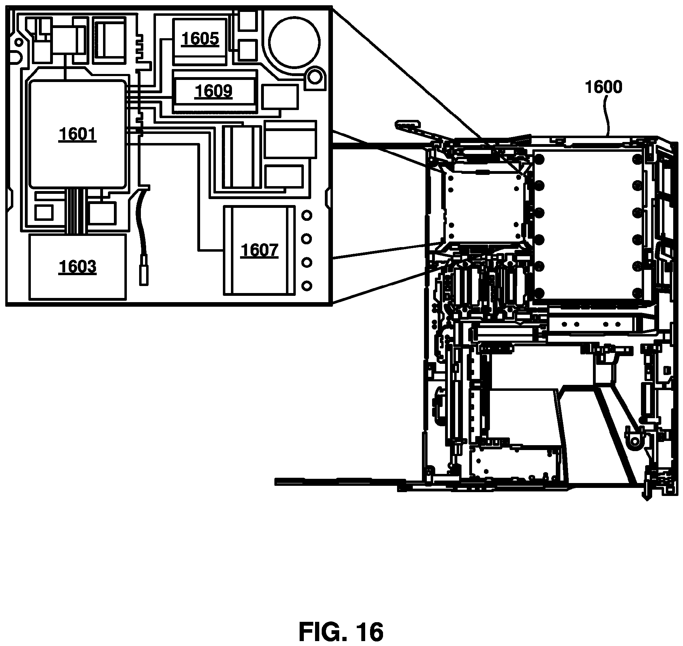

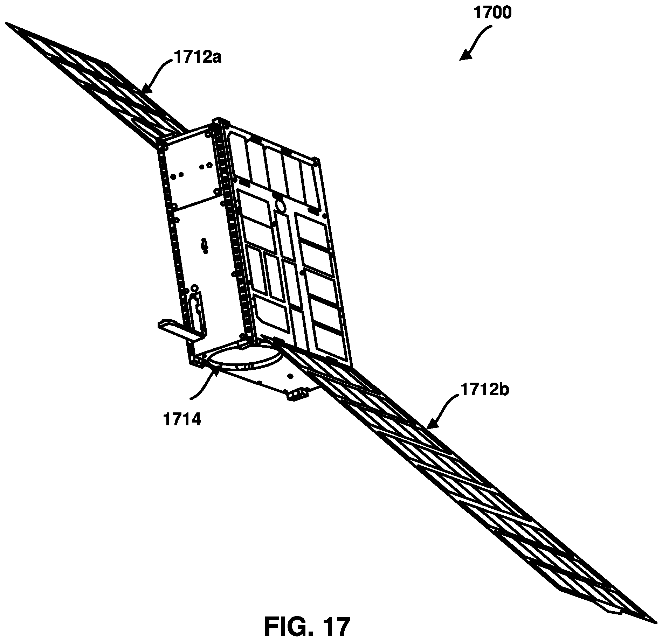

The various embodiments may be implemented on different types of edge devices, including modern satellites such as the BoxSat 1600 illustrated in FIGs. 16 and 17. The BoxSat 1600 may include a processor 1601 connected to memory 1603, which may include standard-performance memory, high-performance memory, volatile memory, non-volatile memory, dynamic memory, static memory, or any combination thereof. For example, memory 1603 may include dynamic random-access memory (DRAM) for volatile storage and non-volatile memory such as flash or solid-state storage, such as a Non-Volatile Memory Express (NVMe) solid-state drive (SSD). The BoxSat 1600 may also include network access ports, communication circuitry, or a transceiver 1605 connected to the processor 1601 for establishing network data connections. Solar panels 1712a and 1712b may supply power to the satellite by converting solar energy into electrical energy that supports sustainable satellite operations. The BoxSat 1600 may also include various instruments and sensors 1607 for data collection and environmental monitoring, which may include cameras 1714, temperature sensors, and radiation detectors, depending on mission objectives. In addition, the BoxSat 1600 may include attitude control systems 1609 to maintain proper orientation in space and for accurate positioning and data collection. These components may be integrated into a compact and durable structure that allows the BoxSat 1600 to carry out complex operations in the demanding environment of space.

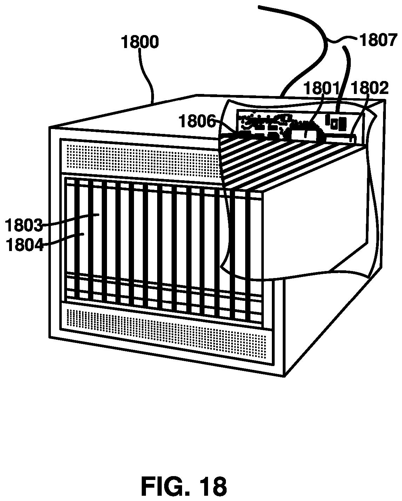

The various embodiments may be implemented on any of a variety of commercially available server devices, such as the server 1800 illustrated in FIG. 18. The server device 1800 may include one or more processors 1801 (e.g., multi-core processor, etc.) coupled to volatile memory 1802, such as RAM, and a large capacity nonvolatile memory, such as a solid-state drive (SSD) 1803. The server device 1800 may also include additional storage interfaces such as USB ports and NVMe slots coupled to the processor 1801. The server device 1800 may include network access ports 1806 coupled to the processor 1801 that allow data connections through a network interface card (NIC) 1804 and a communication network 1807 (e.g., an Internet Protocol (IP) network) connected to other network elements.

The processor 1801 may be any programmable microprocessor, microcomputer or multiple processor chip or chips that may be configured by software instructions (applications) to perform a variety of functions, including the functions of the various embodiments described below. Multiple processors 1801 may be provided, such as one processor dedicated to wireless communication functions and one processor dedicated to running other applications. Typically, software applications may be stored in the internal memory 1802, 1803 before they are accessed and loaded into the processor 1801. The processor 1801 may include internal memory sufficient to store the application software instructions.

For the sake of clarity and ease of presentation, the methods discussed in this application are presented as separate embodiments. While each method is delineated for illustrative purposes, it should be clear to those skilled in the art that various combinations or omissions of these methods, blocks, operations, etc. could be used to achieve a desired result or a specific outcome. It should also be understood that the descriptions herein do not preclude the integration or adaptation of different embodiments of the methods, blocks, operations, etc. from producing a modified or alternative result or solution. The presentation of individual methods, blocks, operations, etc. should not be interpreted as mutually exclusive, limiting, or as being required unless expressly recited as such in the claims.

The processors or processing units discussed in this application may be any programmable microprocessor, microcomputer, or multiple processor chip or chips that can be configured by software instructions (applications) to perform a variety of functions, including the functions of various embodiments described. In some computing devices (MOC, satellite, etc.), multiple processors may be provided, such as one processor within first circuitry dedicated to wireless communication functions and one processor within second circuitry dedicated to running other applications. Software applications may be stored in the memory before they are accessed and loaded into the processor. The processors may include internal memory sufficient to store the application software instructions.

Implementation examples are described in the following paragraphs. While some of the following implementation examples are described in terms of example methods, further example implementations may include: the example methods discussed in the following paragraphs implemented by a computing device or computing system including at least one processor of a processing system coupled to memory and configured (e.g., with processor-executable instructions) to perform operations of the methods of the following implementation examples; the example methods discussed in the following paragraphs implemented by a computing system including means for performing functions of the methods of the following implementation examples; and the example methods discussed in the following paragraphs may be implemented as a non-transitory processor-readable storage medium having stored thereon processor-executable instructions configured to cause a processor of a computing system to perform the operations of the methods of the following implementation examples.

Example 1: A method performed by at least one processor in a processing system in an edge device for managing the flow of data and events, including receiving an ensemble of signals that represents aggregated sensor signals from a plurality of input sensors, processing the ensemble of signals to generate pre-processed data, applying the pre-processed data to one or more neural networks to generate output data identifying one or more events of interest, generating one or more labels corresponding to the identified events of interest, combining outputs from one or more neural networks to generate a unified detection result, predicting a future event based on the unified detection result and historical data, determining a priority classification of the unified detection result or predicted future event, determining whether the priority classification exceeds a high-priority event threshold, triggering a low-latency alert in response to determining that the priority classification exceeds the high-priority event threshold, and storing non-high-priority data and predicted events in association with the generated labels in an onboard non-volatile storage of the edge device in response to determining that the priority classification does not exceed the high-priority event threshold.

Example 2: The method of example 1 in which receiving the ensemble of signals that represents aggregated sensor signals from the plurality of input sensors includes receiving a signal that represents aggregated sensor signals from at least one or more of a camera, an infrared sensor, a pressure sensor, a temperature sensor, a microphone, or a sensor configured to detect ultraviolet or infrared light.

Example 3: The method of either of examples 1 or 2, in which receiving the ensemble of signals that represents aggregated sensor signals from the plurality of input sensors includes receiving a signal that synchronizes data collection from the plurality of input sensors and aligns temporal and spatial characteristics of the sensor signals.

Example 4: The method of any of examples 1-3, further including processing the ensemble of signals in real-time to handle high-throughput data streams from the plurality of input sensors.

Example 5: The method of any of examples 1-4, in which applying the pre-processed data to one or more neural networks to generate output data identifying one or more events of interest includes applying the pre-processed data to two or more of a convolutional neural network (CNN), a recurrent neural network (RNN), and a deep neural network (DNN).

Example 6: The method of any of examples 1-5, in which generating one or more labels corresponding to the identified events of interest includes generating one or more labels based on inference results produced by one or more neural networks.

Example 7: The method of any of examples 1-6, in which combining outputs from one or more neural networks to generate the unified detection result includes combining outputs from one or more neural networks using weighted voting or averaging techniques.

Example 8: The method of any of examples 1-7, in which predicting the future event based on the unified detection result and the historical data includes generating a prediction based on detected patterns, trends in historical data, and the unified detection result.

Example 9: The method of any of examples 1-8, in which determining the priority classification of the unified detection result or the predicted future event includes determining the priority classification of the unified detection result or the predicted future event based on inputs from one or more of an onboard timer, an onboard computer, or an onboard fault detector.

Example 10: The method of any of examples 1-9, further including applying machine learning operations (MLOps) to update one or more neural networks.

Example 11: The method of any of examples 1-10, in which the low-latency alert includes at least one or more of event type information, timestamp information, geographic information, or event summary information.

Example 12: The method of any of examples 1-11 further including storing, in the onboard non-volatile storage, event statistics that include an alert generation frequency or generated alert type information.

Example 13: The method of any of examples 1-12, in which determining the priority classification of the unified detection result or the predicted future event includes dynamically determining the priority classification based on available bandwidth and storage capacity.

As used in this application, terminology such as "component," "module," "system," etc., is intended to encompass a computer-related entity. These entities may involve, among other possibilities, hardware, firmware, a blend of hardware and software, software alone, or software in an operational state. As examples, a component may encompass a running process on a processor, the processor itself, an object, an executable file, a thread of execution, a program, or a computing device. To illustrate further, both an application operating on a computing device and the computing device itself may be designated as a component. A component might be situated within a single process or thread of execution or could be distributed across multiple processors or cores. In addition, these components may operate based on various non-volatile computer-readable media that store diverse instructions and/or data structures. Communication between components may take place through local or remote processes, function, or procedure calls, electronic signaling, data packet exchanges, memory interactions, among other known methods of network, computer, processor, or process-related communications.

A variety of memory types and technologies, both currently available and anticipated for future development, may be incorporated into systems and computing devices that implement the various embodiments. These memory technologies may include non-volatile random-access memories (NVRAM) such as magnetoresistive RAM (MRAM), resistive random-access memory (ReRAM or RRAM), phase-change memory (PCM, PC-RAM, or PRAM), ferroelectric RAM (FRAM), spin-transfer torque magnetoresistive RAM (STT-MRAM), and three-dimensional cross point (3D XPoint) memory. Non-volatile or read-only memory (ROM) technologies may also be included, such as programmable read-only memory (PROM), field programmable read-only memory (FPROM), and one-time programmable non-volatile memory (OTP NVM). Volatile random-access memory (RAM) technologies may further be utilized, including dynamic random-access memory (DRAM), double data rate synchronous dynamic random-access memory (DDR SDRAM), static random-access memory (SRAM), and pseudostatic random-access memory (PSRAM). Additionally, systems and computing devices implementing these embodiments may use solid-state non-volatile storage mediums, such as FLASH memory. The aforementioned memory technologies may store instructions, programs, control signals, and/or data for use in computing devices, system-on-chip (SoC) components, or other electronic systems. Any references to specific memory types, interfaces, standards, or technologies are provided for illustrative purposes and do not limit the claims to any particular memory system or technology unless explicitly recited in the claim language.

The foregoing method descriptions and the process flow diagrams are provided merely as illustrative examples and are not intended to require or imply that the blocks of the various aspects may be performed in the order presented. As will be appreciated by one of skill in the art the order of steps in the foregoing aspects may be performed in any order. Words such as "thereafter," "then," "next," etc. are not intended to limit the order of the blocks; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more embodiments, the functions described may be implemented in hardware, software, firmware, or any combination thereof. If implemented in software, the functions may be stored as one or more instructions or code on a non-transitory computer-readable medium or non-transitory processor-readable medium. The operations of a method or algorithm disclosed herein may be embodied in a processor-executable software module that resides on a non-transitory computer-readable or processor-readable storage medium. Non-transitory computer-readable or processor-readable storage media include any storage media that may be accessed by a computer or processor. By way of example, but not limitation, such non-transitory computer-readable or processor-readable media may include RAM, ROM, EEPROM, flash memory, SSDs, NVMe drives, 3D NAND flash, or any other medium capable of storing program code in the form of instructions or data structures that may be accessed by a computer. Cloud-based storage solutions, including infrastructure-as-a-service (IaaS) platforms, may provide scalable and distributed options for storing and accessing program code. In addition, the operations of a method or algorithm may reside as one or more sets of instructions or code on a non-transitory processor-readable or computer-readable medium, which may be incorporated into a computer program product. Emerging technologies, such as quantum computing storage media and blockchain-based storage solutions, may enhance data integrity and security. AI and ML-improved hardware accelerators, such as GPUs, TPUs, and other dedicated processing units, may be used to efficiently execute complex algorithms.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the following claims and the principles and novel features disclosed herein.

## Claims

1. A method performed by at least one processor in a processing system in an edge device for managing the flow of data and events, the method comprising:
receiving an ensemble of signals that represents aggregated sensor signals from a plurality of input sensors;
processing the ensemble of signals to generate pre-processed data;
applying the pre-processed data to one or more neural networks to generate output data identifying one or more events of interest;
generating one or more labels corresponding to the identified events of interest;
combining outputs from the one or more neural networks to generate a unified detection result;
predicting a future event based on the unified detection result and historical data;
determining a priority classification of the unified detection result or predicted future event;
determining whether the priority classification exceeds a high-priority event threshold;
triggering a low-latency alert in response to determining that the priority classification exceeds the high-priority event threshold; and
storing non-high-priority data and predicted events in association with the generated labels in an onboard non-volatile storage of the edge device in response to determining that the priority classification does not exceed the high-priority event threshold.

2. The method of claim 1, wherein receiving the ensemble of signals that represents aggregated sensor signals from the plurality of input sensors comprising receiving a signal that represents aggregated sensor signals from at least one or more of:
a camera;
an infrared sensor;
a pressure sensor;
a temperature sensor;
a microphone; or
a sensor configured to detect ultraviolet or infrared light.

3. The method of claim 1 or 2, wherein receiving the ensemble of signals that represents aggregated sensor signals from the plurality of input sensors comprising receiving a signal that synchronizes data collection from the plurality of input sensors and aligns temporal and spatial characteristics of the sensor signals.

4. The method of any preceding claim, further comprising processing the ensemble of signals in real-time to handle high-throughput data streams from the plurality of input sensors.

5. The method of any preceding claim, wherein applying the pre-processed data to the one or more neural networks to generate output data identifying one or more events of interest comprises applying the pre-processed data to two or more of:
a convolutional neural network (CNN);
a recurrent neural network (RNN); and
a deep neural network (DNN).

6. The method of any preceding claim, wherein generating one or more labels corresponding to the identified events of interest comprises generating the one or more labels based on inference results produced by the one or more neural networks.

7. The method of any preceding claim, wherein combining outputs from the one or more neural networks to generate the unified detection result comprises combining outputs from the one or more neural networks using weighted voting or averaging techniques.

8. The method of any preceding claim, wherein predicting the future event based on the unified detection result and the historical data comprises generating a prediction based on detected patterns, trends in historical data, and the unified detection result.

9. The method of any preceding claim, wherein determining the priority classification of the unified detection result or the predicted future event comprises determining the priority classification of the unified detection result or the predicted future event based on inputs from one or more of:
an onboard timer;
an onboard computer; or
an onboard fault detector.

10. The method of any preceding claim, further comprising applying machine learning operations (MLOps) to update the one or more neural networks.

11. The method of any preceding claim, wherein the low-latency alert includes at least one or more of:
event type information;
timestamp information;
geographic information; or
event summary information.

12. The method of any preceding claim, further comprising storing, in the onboard non-volatile storage, event statistics that include an alert generation frequency or generated alert type information.

13. The method of any preceding claim, wherein determining the priority classification of the unified detection result or the predicted future event comprises dynamically determining the priority classification based on available bandwidth and storage capacity.

14. An edge device, comprising:
a processing system comprising at least one processor configured to:
receive an ensemble of signals that represents aggregated sensor signals from a plurality of input sensors;
process the ensemble of signals to generate pre-processed data;
apply the pre-processed data to one or more neural networks to generate output data identifying one or more events of interest;
generate one or more labels corresponding to the identified events of interest;
combine outputs from the one or more neural networks to generate a unified detection result;
predict a future event based on the unified detection result and historical data;
determine a priority classification of the unified detection result or predicted future event;
determine whether the priority classification exceeds a high-priority event threshold;
trigger a low-latency alert in response to determining that the priority classification exceeds the high-priority event threshold; and
store non-high-priority data and predicted events in association with the generated labels in an onboard non-volatile storage of the edge device in response to determining that the priority classification does not exceed the high-priority event threshold.

15. The edge device of claim 14, wherein at least one processor is configured to receive the ensemble of signals that represents aggregated sensor signals from the plurality of input sensors by receiving a signal that represents aggregated sensor signals from at least one or more of:
a camera;
an infrared sensor;
a pressure sensor;
a temperature sensor;
a microphone; or
a sensor configured to detect ultraviolet or infrared light.

16. The edge device of claim 14 or 15, wherein at least one processor is configured to receive the ensemble of signals that represents aggregated sensor signals from the plurality of input sensors by receiving a signal that synchronizes data collection from the plurality of input sensors and aligns temporal and spatial characteristics of the sensor signals.

17. The edge device any one of claims 14 to 16, wherein at least one processor is configured to process the ensemble of signals in real-time to handle high-throughput data streams from the plurality of input sensors.

18. The edge device of any one of claims 14 to 17, wherein at least one processor is configured to apply the pre-processed data to the one or more neural networks to generate output data identifying one or more events of interest by applying the pre-processed data to two or more of:
a convolutional neural network (CNN);
a recurrent neural network (RNN); and
a deep neural network (DNN).

19. The edge device of any one of claims 14 to 18, wherein at least one processor is configured to generate one or more labels corresponding to the identified events of interest by generating the one or more labels based on inference results produced by the one or more neural networks.

20. The edge device of any one of claims 14 to 19, wherein at least one processor is configured to combine outputs from the one or more neural networks to generate the unified detection result by combining outputs from the one or more neural networks using weighted voting or averaging techniques.

21. The edge device of any one of claims 14 to 20, wherein at least one processor is configured to predict the future event based on the unified detection result and the historical data by generating a prediction based on detected patterns, trends in historical data, and the unified detection result.

22. The edge device of any one of claims 14 to 21, wherein at least one processor is configured to determine the priority classification of the unified detection result or the predicted future event by determining the priority classification of the unified detection result or the predicted future event based on inputs from one or more of:
an onboard timer;
an onboard computer; or
an onboard fault detector.

23. The edge device of any one of claims 14 to 22, wherein at least one processor is configured to apply machine learning operations (MLOps) to update the one or more neural networks.

24. The edge device of any one of claims 14 to 23, wherein the low-latency alert includes at least one or more of:
event type information;
timestamp information;
geographic information; or
event summary information.

25. The edge device of any one of claims 14 to 24, wherein at least one processor is configured to store, in the onboard non-volatile storage of the edge device, event statistics that include an alert generation frequency or generated alert type information.

26. The edge device of any one of claims 14 to 26, wherein at least one processor is configured to determine the priority classification of the unified detection result or the predicted future event by dynamically determining the priority classification based on available bandwidth and storage capacity.

27. A non-transitory processor-readable storage medium having stored thereon processor-executable instructions to cause at least one processor in a processing system in an edge device to perform operations for managing the flow of data and events, the operations comprising:
receiving an ensemble of signals that represents aggregated sensor signals from a plurality of input sensors;
processing the ensemble of signals to generate pre-processed data;
applying the pre-processed data to one or more neural networks to generate output data identifying one or more events of interest;
generating one or more labels corresponding to the identified events of interest;
combining outputs from the one or more neural networks to generate a unified detection result;
predicting a future event based on the unified detection result and historical data;
determining a priority classification of the unified detection result or predicted future event;
determining whether the priority classification exceeds a high-priority event threshold;
triggering a low-latency alert in response to determining that the priority classification exceeds the high-priority event threshold; and
storing non-high-priority data and predicted events in association with the generated labels in an onboard non-volatile storage of the edge device in response to determining that the priority classification does not exceed the high-priority event threshold.

28. The non-transitory processor-readable storage medium of claim 27, wherein the stored processor-executable instructions are configured to cause at least one processor to perform operations such that receiving the ensemble of signals that represents aggregated sensor signals from the plurality of input sensors comprising receiving a signal that represents aggregated sensor signals from at least one or more of:
a camera;
an infrared sensor;
a pressure sensor;
a temperature sensor;
a microphone; or
a sensor configured to detect ultraviolet or infrared light.

29. The non-transitory processor-readable storage medium of claim 27 or 28, wherein the stored processor-executable instructions are configured to cause at least one processor to perform operations such that receiving the ensemble of signals that represents aggregated sensor signals from the plurality of input sensors comprising receiving a signal that synchronizes data collection from the plurality of input sensors and aligns the temporal and spatial characteristics of the sensor signals.

30. The non-transitory processor-readable storage medium of any one of claims 27 to 29, wherein the stored processor-executable instructions are configured to cause at least one processor to perform operations further comprising processing the ensemble of signals in real-time to handle high-throughput data streams from the plurality of input sensors.

31. The non-transitory processor-readable storage medium of any one of claims 27 to 30, wherein the stored processor-executable instructions are configured to cause at least one processor to perform operations such that applying the pre-processed data to the one or more neural networks to generate output data identifying one or more events of interest comprises applying the pre-processed data to two or more of:
a convolutional neural network (CNN);
a recurrent neural network (RNN); and
a deep neural network (DNN).

32. The non-transitory processor-readable storage medium of any one of claims 27 to 31, wherein the stored processor-executable instructions are configured to cause at least one processor to perform operations such that generating one or more labels corresponding to the identified events of interest comprises generating the one or more labels based on inference results produced by the one or more neural networks.

33. The non-transitory processor-readable storage medium of any one of claims 27 to 32, wherein the stored processor-executable instructions are configured to cause at least one processor to perform operations such that combining outputs from the one or more neural networks to generate the unified detection result comprises combining outputs from the one or more neural networks using weighted voting or averaging techniques.

34. The non-transitory processor-readable storage medium of any one of claims 27 to 33, wherein the stored processor-executable instructions are configured to cause at least one processor to perform operations such that predicting the future event based on the unified detection result and the historical data comprises generating a prediction based on detected patterns, trends in historical data, and the unified detection result.

35. The non-transitory processor-readable storage medium of any one of claims 27 to 34, wherein the stored processor-executable instructions are configured to cause at least one processor to perform operations such that determining the priority classification of the unified detection result or the predicted future event comprises determining the priority classification of the unified detection result or the predicted future event based on inputs from one or more of:
an onboard timer;
an onboard computer; or
an onboard fault detector.

36. The non-transitory processor-readable storage medium of any one of claims 27 to 35, wherein the stored processor-executable instructions are configured to cause at least one processor to perform operations further comprising applying machine learning operations (MLOps) to update the one or more neural networks.

37. The non-transitory processor-readable storage medium of any one of claims 27 to 36, wherein the stored processor-executable instructions are configured to cause at least one processor to perform operations such that the low-latency alert includes at least one or more of:
event type information;
timestamp information;
geographic information; or
event summary information.

38. The non-transitory processor-readable storage medium of any one of claims 27 to 37, wherein the stored processor-executable instructions are configured to cause at least one processor to perform operations further comprising storing in the onboard non-volatile storage of the edge device event statistics that include an alert generation frequency or generated alert type information.

39. The non-transitory processor-readable storage medium of any one of claims 27 to 38, wherein the stored processor-executable instructions are configured to cause at least one processor to perform operations such that determining the priority classification of the unified detection result or the predicted future event comprises dynamically determining the priority classification based on available bandwidth and storage capacity.
